(19)

**Europäisches Patentamt**
**European Patent Office**
**Office européen des brevets**

(11) **EP 4 664 812 A1**

(12) **EUROPEAN PATENT APPLICATION**
published in accordance with Art. 153(4) EPC

(43) Date of publication:
**17.12.2025 Bulletin 2025/51**

(21) Application number: **24753660.0**

(22) Date of filing: **08.02.2024**

(51) International Patent Classification (IPC):
**H04L 5/00** (2006.01)    **H04B 7/0452** (2017.01)

(52) Cooperative Patent Classification (CPC):
**H04B 7/0452; H04L 5/00**

(86) International application number:
**PCT/KR2024/001897**

(87) International publication number:
**WO 2024/167339 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.02.2023 KR 20230018285**

(71) Applicant: **LG Electronics Inc.**
**Yeongdeungpo-gu**
**Seoul 07336 (KR)**

(72) Inventors:
• **JEONG, Chanho**
**Seoul 06772 (KR)**
• **KIM, Hyungtae**
**Seoul 06772 (KR)**
• **KANG, Jiwon**
**Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR DMRS TRANSMISSION AND RECEPTION IN WIRELESS COMMUNICATION SYSTEM**

(57) A method performed by a terminal according to an embodiment described in the present disclosure comprises the steps of: receiving configuration information related to a DMRS; receiving DCI for scheduling a PDSCH; receiving the DMRS for the PDSCH; and receiving the PDSCH. On the basis that the DMRS configuration is based on the enhanced DMRS type and a value indicated on the basis of an antenna port field is 2, the remaining orthogonal antenna ports based on the same CDM group are related to PDSCH transmission to another terminal in which the enhanced DMRS type is configured.

【FIG. 3】

START

RECEIVE CONFIGURATION INFORMATION RELATED TO DMRS — S310

RECEIVE DCI FOR SCHEDULING PDSCH — S320

RECEIVE DMRS FOR PDSCH — S330

RECEIVE PDSCH — S340

END

EP 4 664 812 A1

**Description**

[TECHNICAL FIELD]

The present disclosure relates to a method and a device for DMRS transmission and reception in a wireless communication system.

[BACKGROUND]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

On the other hand, multi-UE scheduling may be limited as follows. When a specific value (e.g., value 2-> [CDM group 1, ports 0 & 1]) of the values defined by the table for the DMRS type is indicated by an antenna port field, all remaining orthogonal antenna ports are not associated with PDSCH transmission to another UE.

[DISCLOSURE]

[TECHNICAL PROBLEMS]

According to Rel-18 enhancement, the number of DMRS ports is doubled compared to an existing scheme. When MU scheduling is restricted in the same way as the existing scheme as described above, restriction of the MU scheduling may serve as a constraint on maximally utilizing increased antenna ports.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

**[TECHNICAL SOLUTION]**

A method performed by a user equipment (UE) in a wireless communication system according to an embodiment of the present disclosure comprises receiving configuration information related to a demodulation reference signal (DMRS), receiving downlink control information (DCI) for scheduling a physical downlink shared channel (PDSCH), receiving the DMRS for the PDSCH, and receiving the PDSCH.

A DMRS configuration based on the configuration information is based on a DMRS type or an enhanced DMRS type. The DCI includes an antenna port field. The antenna port field indicates one of values defined by a table.

Each of the values defined by the table is related to a number of code division multiplexing (CDM) groups and at least one antenna port.

2 of the values defined in the table is related to one CDM group and antenna ports 1000 and 1001.

Based on the DMRS configuration being based on the DMRS type, and the value indicated based on the antenna port field being 2; remaining orthogonal antenna ports are not associated with PDSCH transmission to another UE.

Based on the DMRS configuration being based on the enhanced DMRS type, and the value indicated based on the antenna port field being 2: remaining orthogonal antenna ports based on a same CDM group are related to PDSCH transmission to another UE in which the enhanced DMRS type is configured.

The DMRS type may be DMRS Type 1 or DMRS Type 2. The enhanced DMRS type may be enhanced DMRS Type 1 or enhanced DMRS Type 2.

i) antenna ports 1000 to 1003 or ii) antenna ports 1000 to 1003 and 1008 to 1011 may be supported for the DMRS Type 1.

i) antenna ports 1000 to 1005 or ii) antenna ports 1000 to 1011 may be supported for the DMRS Type 2.

i) antenna ports 1000 to 1003 and 1008 to 1011 or ii) antenna ports 1000 to 1015 may be supported for the enhanced DMRS Type 1.

i) antenna ports 1000 to 1005 and 1012 to 1017 or ii) antenna ports 1000 to 1023 may be supported for the enhanced DMRS Type 2.

The table may be a table determined based on i) the DMRS configuration and ii) a maximum number of symbols related to the DMRS among a plurality of tables.

The plurality of tables may include i) a first table, a second table, a third table, and a fourth table which are related to the DMRS type and ii) a fifth table, a sixth table, a seventh table, and an eighth table which are related to the enhanced DMRS type.

The table may be determined as the first table based on the DMRS configuration being DMRS type 1 and the maximum number being 1.

The table may be determined as the fifth table based on the DMRS configuration being enhanced DMRS Type 1 and the maximum number being 1.

The fifth table may include i) first values and ii) second values defined in the first table.

Each of the first values may be related to at least one of antenna ports 1000 to 1003.

Each of the second values may be related to at least one of antenna ports 1008 to 1011.

A specific first value among the first values may be related to one CDM group and antenna ports 1000 and 1001. A specific second value among the second values may be related to one CDM group and antenna ports 1008 and 1009.

Based on the DMRS configuration being based on the enhanced DMRS Type 1, and the value indicted based on the antenna port field being the specific second value: remaining orthogonal antenna ports based on a same CDM group may be related to PDSCH transmission to another UE in which the enhanced DMRS Type 1 is configured.

The fifth table may further include third values related to three or more antenna ports among antenna ports 1000 to 1011. A specific third value among the third values may be related to one CDM group and antenna ports 1000, 1001, 1008, and 1009.

Based on the DMRS configuration being based on the enhanced DMRS type 1, and the value indicted based on the antenna port field being the specific third value: remaining orthogonal antenna ports may not be associated with PDSCH transmission to another UE.

A user equipment (UE) configured to operate in a wireless communication according to another embodiment of the present disclosure comprises one or more transceivers, one or more processors, and one or more memories that are connected to the one or more processors and store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions configure the one or more processors to perform all steps of any one of the methods.

One or more non-transitory computer readable mediums according to another embodiment of the present disclosure store instructions. The instructions executable by one or more processors configure the one or more processors to perform all steps of any one of the methods.

A method performed by a base station in a wireless communication system according to another embodiment of the present disclosure comprises transmitting configuration information related to a demodulation reference signal (DMRS), transmitting downlink control information (DCI) for scheduling a physical downlink shared channel (PDSCH), transmitting the DMRS for the PDSCH, and transmitting the PDSCH.

A DMRS configuration based on the configuration information is based on a DMRS type or an enhanced DMRS type. The DCI includes an antenna port field. The antenna port field indicates one of values defined by a table.

Each of the values defined by the table is related to a number of code division multiplexing (CDM) groups and at least one antenna port.

2 of the values defined in the table is related to one CDM group and antenna ports 1000 and 1001.

Based on the DMRS configuration being based on the DMRS type, and the value indicated based on the antenna port field being 2: remaining orthogonal antenna ports are not associated with PDSCH transmission to another UE.

Based on the DMRS configuration being based on the enhanced DMRS type, and the value indicated based on the antenna port field being 2: remaining orthogonal antenna ports based on a same CDM group are related to PDSCH transmission to another UE in which the enhanced DMRS type is configured.

A base station configured to operate in a wireless communication according to another embodiment of the present disclosure comprises one or more transceivers, one or more processors, and one or more memories that are connected to the one or more processors and store instructions.

The instructions, based on being executed by the one or more processors, configure the one or more processors to perform all steps of the method.

[ADVANTAGEOUS EFFECTS]

According to an embodiment of the present disclosure, a value of the same type as the existing defined value (a value related to the same number of CDM groups and antenna port(s) as the existing scheme) is used for the DMRS type and the enhanced DMRS type, but a specific value indicated by the antenna port field (e.g., a value for which MU scheduling is restricted for the DMRS type) is allowed for MU scheduling in the case of the enhanced DMRS type. Therefore, a scheduling capability based on the enhanced DMRS type can be maximized while minimizing implementation complexity.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWING]

FIG. 1 is a flowchart illustrating an example of a DL DMRS procedure.
FIG. 2 illustrates an example of downlink transmission/reception operation.
FIG. 3 is a flowchart illustrating a method performed by a user equipment according to an embodiment of the present disclosure.
FIG. 4 is a flowchart illustrating a metshod performed by a base station according to another embodiment of the present disclosure.
FIG. 5 illustrates configurations of a first device and a second device according to an embodiment of the present disclosure.

[DETAILED DESCRIPTION]

Reference will now be made in detail to embodiments of the present disclosure, examples of which are illustrated in the accompanying drawings. A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

**DeModulation Reference Signal (DMRS)**

DMRS reception procedure

A DMRS-related operation for PDSCH reception will be described.

When receiving PDSCH scheduled by DCI format 1_0 or receiving PDSCH before dedicated higher layer configuration of any of the parameters dmrs-AdditionalPosition, maxLength, and dmrs-Type, the UE assumes that the PDSCH is not present in any symbol carrying DM-RS except for PDSCH with allocation duration of 2 symbols with PDSCH mapping type B, and a single symbol front-loaded DM-RS of configuration type 1 on DM-RS port 1000 is transmitted, and that all the remaining orthogonal antenna ports are not associated with transmission of PDSCH to another UE.

In addition, for PDSCH with mapping type A, the UE assumes that dmrs-AdditionalPosition='pos2' and up to two additional single-symbol DM-RS are present in a slot according to the PDSCH duration indicated in the DCI. For PDSCH with allocation duration of 7 symbols for normal CP or 6 symbols for extended CP with mapping type B, the UE assumes that one additional single-symbol DM-RS is present in the 5th or 6th symbol when the front-loaded DM-RS symbol is in the 1st or 2nd symbol respectively of the PDSCH allocation duration. Otherwise, the UE assumes that the additional DM-RS symbol is not present. And, for PDSCH with allocation duration of 4 symbols with mapping type B, the UE assumes that no additional DM-RS are present. For PDSCH with allocation duration of 2 symbols with mapping type B, the UE assumes that no additional DM-RS are present, and the UE assumes that the PDSCH is present in the symbol carrying DM-RS.

When receiving the PDSCH scheduled by DCI format 1_1 by a PDCCH having CRC scrambled by C-RNTI, MCS-C-RNTI, or configured scheduling (CS)-RNTI,

- The UE may be configured as a higher layer parameter drms_Type and the configured DMRS configuration type is used for receiving the PDSCH.
- The UE may be configured as a maximum number of front-loaded DMRS symbols for the PDSCH by the higher layer parameter maxLength given by DMRS-DownlinkConfig.

In the UE, the number of DMRS ports may be scheduled by an antenna port index of DCI format 1_1.

The DMRS configuration type is configured by the dmrs-Type parameter in DMRS-DownlinkConfig IE of Table 1. DMRS configuration type 1 has a higher RS density in a frequency domain and supports up to 4(8) ports for single (double)-symbol DMRS. In addition, DMRS configuration type 1 supports length-2 F-CDM and FDM for the single-symbol DMRS and supports length-2 F/T-CDM and FDM for the double-symbol DMRS. DMRS configuration type 2 has more DMRS antenna ports and supports up to 6(12) ports for the single (double)-symbol DMRS.

Table 1 below is a table showing one example of DMRS-DownlinkConfig IE used for configuring downlink DMRS for the PDSCH.

[Table 1]

```
DMRS-DownlinkConfig
The IE DMRS-DownlinkConfig is used to configure downlink demodulation
reference signals for PDSCH.
                    DMRS-DownlinkConfig information element
-- ASN1START
-- TAG-DMRS-DOWNLINKCONFIG-START

DMRS-DownlinkConfig ::=               SEQUENCE {
    dmrs-Type                             ENUMERATED {type2}
OPTIONAL,     -- Need S
    dmrs-AdditionalPosition           ENUMERATED {pos0, pos1,
pos3}                                      OPTIONAL,    --
Need S
    maxLength                             ENUMERATED {len2}
OPTIONAL,     -- Need S
    scramblingID0                         INTEGER (0..65535)
OPTIONAL,     -- Need S
    scramblingID1                         INTEGER (0..65535)
OPTIONAL,     -- Need S
    phaseTrackingRS                       SetupRelease { PTRS-
DownlinkConfig   }                            OPTIONAL,
-- Need M

    ...,
    [[
    dmrs-Downlink-r16                 ENUMERATED {enabled}
OPTIONAL       -- Need R
    ]],
    [[
    dmrs-TypeEnh-r18                  ENUMERATED {enabled}
OPTIONAL       -- Need R
    ]]
}
-- TAG-DMRS-DOWNLINKCONFIG-STOP
-- ASN1STOP
```

| **DMRS-DownlinkConfig field descriptions** |
|---|
| **dmrs-Type** <br> Selection of the DMRS type to be used for DL (see TS 38.211 [16], clause 7.4.1.1.1). If the field is absent, the UE uses DMRS type 1. |
| **dmrs-TypeEnh** <br> Enables the use of enhanced DMRS type1 or enhanced DMRS type2 with field *dmrs-Type* (see TS 38.211 [16], clause 7.4.1.1.1). If the field is present and *dmrs-Type* is absent, the UE uses DMRS eType 1. If the field is present and *dmrs-Type* is present, the UE uses DMRS eType 2. |

In Table 1, parameter dmrs-AdditionalPosition represents a location for additional DM-RS in DL and when there is no corresponding parameter, the UE applies a pos2 value. Parameter Dmrs-Type represents selection of the DMRS type to be used for DL and when there is no corresponding parameter, the UE uses DMRS type 1. Parameter Max-Length represents the maximum number of OFDM symbols for DL front loaded DMRS, and len1 corresponds to a value of 1. Parameter PhaseTrackingRS configures DL PTRS and when the corresponding parameter does not exist or is cancelled, the UE assumes that there is no DL PTRS.

The dmrs-TypeEnh parameter enables the use of enhanced DMRS type 1 or enhanced DMRS type 2. When the dmrs-TypeEnh parameter is configured and the dmrs-Type is not configured, the UE uses enhanced DMRS type 1 (DMRS eType 1). When the dmrs-TypeEnh parameter and the dmrs-Type are configured, the UE uses enhanced DMRS type 2 (DMRS eType 2).

For DM-RS configuration type 1,

- when is scheduled with one codeword and antenna port mapping is allocated with indices of {2, 9, 10, 11, or 30} or the UE is scheduled with two codewords,

the UE may assume that all remaining orthogonal antenna ports are not related to transmission of the PDSCH to another UE.

For DM-RS configuration type 2,

- when is scheduled with one codeword and the antenna port mapping is allocated with indices of {2, 10, 23} or the UE is scheduled with two codewords,

the UE may assume that all remaining orthogonal antenna ports are not related to transmission of the PDSCH to another UE.

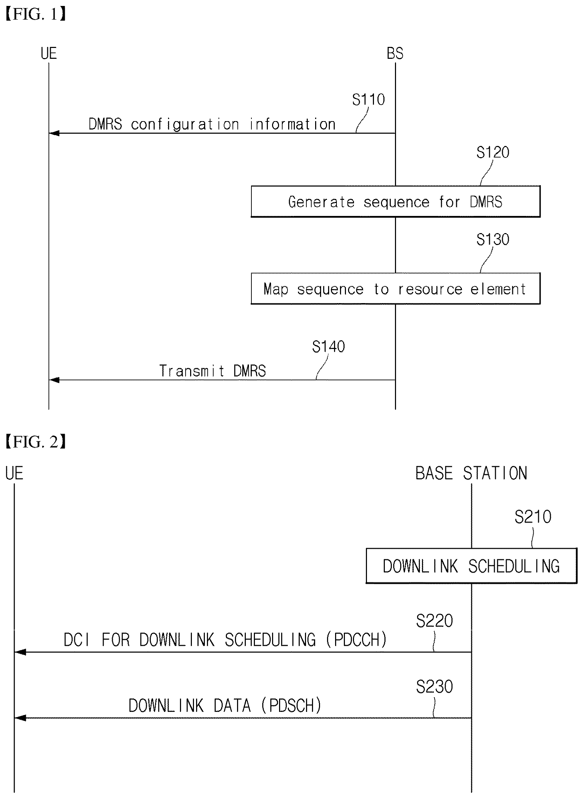

FIG. 1 is a flow chart illustrating an example of a DL DMRS procedure.

A base station transmits DMRS configuration information to a UE, in S110.

The DMRS configuration information may refer to DMRS-DownlinkConfig IE. The DMRS-DownlinkConfig IE may include parameter dmrs-Type, parameter dmrs-AdditionalPosition, parameter maxLength, parameter phaseTrackingRS, etc.

The parameter dmrs-Type is a parameter for selection of a DMRS configuration type to be used for DL. In NR, the DMRS may be classified into two configuration types: (1) DMRS configuration type 1 and (2) DMRS configuration type 2. The DMRS configuration type 1 is a type having a higher RS density in the frequency domain, and the DMRS configuration type 2 is a type having more DMRS antenna ports.

The parameter dmrs-AdditionalPosition is a parameter indicating the position of an additional DMRS in the DL. If the corresponding parameter is not present, the UE applies value of pos2. In the DMRS, a first position of a front-loaded DMRS may be determined according to the PDSCH mapping type (type A or type B), and an additional DMRS may be configured to support a high speed UE. The front-loaded DMRS occupies 1 or 2 consecutive OFDM symbols and is indicated by RRC signaling and downlink control information (DCI).

The parameter maxLength is a parameter indicating the maximum number of OFDM symbols for DL front-loaded DMRS. The parameter phaseTrackingRS is a parameter for configuring DL PTRS. If the corresponding parameter is not present or has been canceled, the UE assumes that there is no DL PTRS.

The base station generates a sequence used for DMRS, in S120.

The sequence for DMRS is generated according to Equation 1 below.

【Equation 1】

$$r(n) = \frac{1}{\sqrt{2}}(1 - 2 \cdot c(2n)) + j\frac{1}{\sqrt{2}}(1 - 2 \cdot c(2n+1))$$

The pseudo-random sequence $c(i)$ is defined by 3GPP TS 38.211 5.2.1. That is, $c(i)$ may be a length-31 gold sequence using two m-sequences. A pseudo-random sequence generator is initialized by Equation 2 below.

【Equation 2】

$$c_{\text{init}} = \left(2^{17}\left(N_{\text{symb}}^{\text{slot}}n_{\text{s,f}}^{\mu} + l + 1\right)\left(2N_{\text{ID}}^{n_{\text{SCID}}} + 1\right) + 2N_{\text{ID}}^{n_{\text{SCID}}} + n_{\text{SCID}}\right) \bmod 2^{31}$$

where $l$ is the OFDM symbol number within the slot, and $n_{\text{s,f}}^{\mu}$ is the slot number within a frame. $N_{\text{ID}}^{0}$, $N_{\text{ID}}^{1} \in \{0, 1, \dots, 65535\}$ are given by the higher-layer parameter *scramblingID0* and *scramblingID1*, respectively, in the *DMRS-DownlinkConfig* IE if provided and the PDSCH is scheduled by PDCCH using DCI format 1_1 with the CRC scrambled by C-RNTI, MCS-C-RNTI, or CS-RNTI.

**[0066]** - $N_{\text{ID}}^{0} \in \{0, 1, \dots, 65535\}$ is given by the higher-layer parameter *scramblingID0* in the *DMRS-DownlinkConfig* IE if provided and the PDSCH is scheduled by PDCCH using DCI format 1_0 with the CRC scrambled by C-RNTI, MCS-C-RNTI, or CS-RNTI.

**[0067]** - $N_{\text{ID}}^{n_{\text{SCID}}} = N_{\text{ID}}^{\text{cell}}$, otherwise, the quantity $n_{\text{SCID}} \in \{0, 1\}$ is given by the DMRS sequence initialization field in the DCI associated with the PDSCH transmission if DCI format 1_1 is used.

The base station maps the generated sequence to a resource element, in S130. Here, the resource element may mean including at least one of time, frequency, antenna port, or code.

The base station transmits the DMRS to the UE on the resource element, in S140. The UE receives the PDSCH using the received DMRS.

<u>UE DMRS transmission procedure</u>

A DMRS related operation for receiving the PUSCH will be described. As described above, UL means signal transmission (or communication) from the UE to the BS. The UL DMRS related operation is similar to the DL DMRS related operation described above, and names of the parameters related to DL may be replaced with the names of parameters related to UL.

That is, DMRS-DownlinkConfig IE may be replaced with DMRS-UplinkConfig IE, the PDSCH mapping type may be replaced with a PUSCH mapping type, and the PDSCH may be replaced with the PUSCH. In addition, in the DL DMRS related operation, the BS may be replaced with the UE and the UE may be replaced with the BS. Sequence generation for the UL DMRS may be defined differently according to whether transform decoding being enabled.

More specifically, in respect to the DMRS, when cyclic prefix orthogonal frequency division multiplexing (CP-OFDM) is used (or when transform precoding is not enabled), a PN sequence is used and when Discrete Fourier Transform-spread-OFDM (DFT-s-OFDM) is used (when the transform precoding is enabled), a ZC sequence having a length of 30 or more is used.

Table 2 below is a table showing one example of DMRS-UplinkConfig IE used for configuring uplink DMRS for the PUSCH.

[Table 2]

```
-- ASN1START
-- TAG-DMRS-UPLINKCONFIG-START

DMRS-UplinkConfig ::=                    SEQUENCE {
        dmrs-Type                                ENUMERATED {type2}
OPTIONAL,      -- Need S
        dmrs-AdditionalPosition          ENUMERATED {pos0, pos1, pos3}
OPTIONAL,      -- Need S
        phaseTrackingRS                            SetupRelease { PTRS-
UplinkConfig }                              OPTIONAL,     -- Need
M
        maxLength                                ENUMERATED {len2}
OPTIONAL,      -- Need S

    transformPrecodingDisabled    SEQUENCE {
        scramblingID0                            INTEGER (0..65535)
OPTIONAL,      -- Need S
        scramblingID1                            INTEGER (0..65535)
OPTIONAL,      -- Need S
        ...
    }
OPTIONAL,      -- Need R
    transformPrecodingEnabled     SEQUENCE {
        nPUSCH-Identity                          INTEGER(0..1007)
OPTIONAL,      -- Need S
        sequenceGroupHopping         ENUMERATED {disabled}
OPTIONAL,      -- Need S
        sequenceHopping              ENUMERATED {enabled}
OPTIONAL,      -- Need S
        ...
    }
OPTIONAL,      -- Need R
    ...
}

-- TAG-DMRS-UPLINKCONFIG-STOP
-- ASN1STOP
```

In Table 2, parameter dmrs-AdditionalPosition represents a location for additional DM-RS in UL and when there is no corresponding parameter, the UE applies a pos2 value. Parameter Dmrs-Type represents selection of the DMRS type to be used for UL and when there is no corresponding parameter, the UE uses DMRS type 1.

Parameter Max-Length represents the maximum number of OFDM symbols for UL front loaded DMRS, and len1 corresponds to a value of 1. Parameter PhaseTrackingRS configures UL PTRS. Parameter transformPrecodingdisabled indicates a DMRS-related parameter for Cyclic Prefix OFDM. Parameter transformPrecodingEnabled indicates DMRS-related parameters for DFT-s-OFDM (Transform Precoding).

Hereinafter, the UE DM-RS transmission procedure will be described in more detail.

When the transmitted PUSCH is neither scheduled by DCI format 0_1 with CRC scrambled by C-RNTI, CS-RNTI, or MCS-C-RNTI nor corresponds to a configured grant, the UE uses a single symbol front-loaded DM-RS of configuration type 1 on DM-RS port 0, and the remaining REs that are not used for DM-RS in the symbols are not used for any PUSCH transmission except for a PUSCH with an allocated duration of 2 or less OFDM symbols with disabled transform precoding. Additional DM-RS may be transmitted according to a scheduling type and PUSCH duration by considering whether frequency hopping is enabled.

When the frequency hopping is disabled: The UE assumes that dmrs-AdditionalPosition is equal to 'pos2', and up to 2 additional DM-RSs may be transmitted according to the PUSCH duration.

When the frequency hopping is enabled, the UE assumes that dmrs-AdditionalPosition is equal to 'pos1', and up to 1 additional DM-RSs may be transmitted according to the PUSCH duration.

When the transmitted PUSCH is scheduled by activation DCI format 0_0 with CRC scrambled by CS-RNTI, the UE uses a single symbol front-loaded DM-RS of a configuration type provided by a higher-layer parameter dmrs-Type of configuredGrantConfig on DM-RS port 0, and the remaining REs that are not used for DM-RS in the symbols are not used for any PUSCH transmission except for a PUSCH with an allocated duration of two or less OFDM symbols with disabled transform precoding, and an additional DM-RS having dmrs-AdditionalPosition from configuredGrantConfig may be transmitted based on the scheduling type and the PUSCH duration considering whether the frequency hopping is enabled.

When the transmitted PUSCH is scheduled by DCI format 0_1 having CRC scrambled by C-RNTI, CS-RNTI, or MCS-RNTI or corresponds to the configured grant,

- The UE may be configured as the higher layer parameter dmrs-Type in DMRS-UplinkConfig and the configured DM-RS configuration type is used for transmitting the PDSCH.
- The UE may be configured as a maximum number of front-loaded DMRS symbols for the PUSCH by the higher layer parameter maxLength in DMRS-UplinkConfig.

When the UE transmitting the PUSCH is configured as higher layer parameter phaseTrackingRS in DMRS-UplinkConfig, the UE may assume that the configurations do not simultaneously occur for the transmitted PUSCH.

- Each random DM-RS port of 4-7 or 6-11 is scheduled by the UE for DM-RS configuration type 1 and type 2 and the PT-RS is transmitted from the UE.

For the PUSCH scheduled by DCI format 0_1, by activation DCI format 0_1 having the CRC scrambled by the CS-RNTI or by configured grant type 1 configuration, the UE assumes that a DM-RS CDM group is not used for data transmission.

Hereinafter, a downlink transmission/reception operation and an uplink transmission/reception operation will be sequentially described.

Downlink transmission/reception operation

FIG. 2 illustrates an example of downlink transmission/reception operation.

A base station may schedule downlink transmission such as frequency/time resources, a transport layer, a downlink precoder, MCS, and the like (S210). As an example, the base station may determine a beam for transmitting a PDSCH to a UE.

The UE may receive downlink control information (DCI: Downlink Control Information) for downlink scheduling (i.e., including scheduling information of the PDSCH) on a PDCCH from the base station (S220).

DCI format 1_0 or DCI format 1_1 may be used for downlink scheduling, and DCI format 1_1 may include the following information. For example, DCI format 1_1 may include at least one of a DCI format identifier, a bandwidth part indicator, frequency domain resource assignment, time domain resource assignment, a PRB bundling size indicator, a rate matching indicator, ZP CSI-RS trigger, antenna port(s), transmission configuration indication (TCI), an SRS request, and demodulation reference signal (DMRS) sequence initialization.

In particular, the number of DMRS ports can be scheduled, and SU (single-user) / MU (multi- user) transmission scheduling can be performed according to each state indicated in the antenna port(s) field.

In addition, the TCI field consists of 3 bits, and the QCL for the DMRS may be dynamically indicated by indicating a maximum of 8 TCI states according to the TCI field value.

The UE may receive downlink data from the base station on the PDSCH (S230).

When the UE detects a PDCCH including DCI format 1_0 or 1_1, the UE may decode the PDSCH according to an indication by the corresponding DCI. Here, when the UE receives a PDSCH scheduled by DCI format 1, the UE may set a DMRS configuration type by a higher layer parameter 'dmrs-Type', and the DMRS type is used to receive the PDSCH. In addition, the UE may set the maximum number of DMRS symbols front-loaded for the PDSCH by a higher layer parameter 'maxLength'.

In the case of DMRS configuration type 1, when a single codeword is scheduled for the UE and an antenna port mapped with an index of {2, 9, 10, 11 or 30} is specified, or two codewords are scheduled for the UE, the UE assumes that all remaining orthogonal antenna ports are not associated with PDSCH transmission to another UE. In the case of DMRS configuration type 2, if a single codeword is scheduled for the UE and an antenna port mapped with an index of {2, 10 or 23} is specified, or if two codewords are scheduled for the UE, the UE assumes that all the remaining orthogonal antenna ports are not associated with PDSCH transmission to another UE.

When the UE receives the PDSCH, it may assume precoding granularity P' to be consecutive resource blocks in the frequency domain. Here, P' may correspond to one of {2, 4, broadband}. If P' is determined to be wideband, the UE does not expect to be scheduled with non-contiguous PRBs and the UE may assume that the same precoding is applied to allocated resources. On the other hand, if P' is determined as any one of {2, 4}, a precoding resource block group (PRG) is divided into P' consecutive PRBs. The actual number of consecutive PRBs in each PRG may be one or more. The UE may assume that the same precoding is applied to consecutive downlink PRBs in the PRG.

In order for the UE to determine a modulation order, a target code rate, and a transport block size in the PDSCH, the UE may first read a 5-bit MCD field in the DCI and determine the modulation order and the target code rate. Then, the UE may read a redundancy version field in the DCI and determine a redundancy version. In addition, the UE may determine the transport block size using the number of layers and the total number of allocated PRBs before rate matching.

Uplink transmission/reception operation

The eNB may schedule uplink transmission such as the frequency/time resource, the transport layer, an uplink precoder, the MCS, etc. In particular, the eNB may determine a beam for PUSCH transmission of the UE through the beam management operations described above. And, the UE may receive, from the eNB, DCI for uplink scheduling (i.e., including scheduling information of the PUSCH) on the PDCCH. DCI format 0_0 or 0_1 may be used for the uplink scheduling and in particular, DCI format 0_1 may include information such as the following examples: Identifier for DCI formats, UL/Supplementary uplink (SUL) indicator, Bandwidth part indicator, Frequency domain resource assignment, Time domain resource assignment, Frequency hopping flag, Modulation and coding scheme (MCS), SRS resource indicator (SRI), Precoding information and number of layers, Antenna port(s), SRS request, DMRS sequence initialization, and Uplink Shared Channel (UL-SCH) indicator.

In particular, configured SRS resources in an SRS resource set associated with higher layer parameter "usage" may be indicated by an SRS resource indicator field. Further, "spatialRelationInfo" may be configured for each SRS resource and a value of "spatialRelationInfo" may be one of {CRI, SSB, and SRI}.

In addition, the UE may transmit the uplink data to the eNB on the PUSCH. When the UE detects a PDCCH including DCI format 0_0 or 0_1, the UE may transmit the corresponding PUSCH according to the indication by the corresponding DCI. two schemes(Codebook based transmission scheme and non-codebook based transmission scheme) are supported for PUSCH transmission.

In the case of the codebook based transmission, when higher layer parameter txConfig" is set to "codebook", the UE is configured to the codebook based transmission. On the contrary, when higher layer parameter txConfig" is set to "nonCodebook", the UE is configured to the non-codebook based transmission. When higher layer parameter "txConfig" is not configured, the UE does not predict that the PUSCH is scheduled by DCI format 0_1. When the PUSCH is scheduled by DCI format 0_0, the PUSCH transmission is based on a single antenna port. In the case of the codebook based transmission, the PUSCH may be scheduled by DCI format 0_0, DCI format 0_1, or semi-statically. When the PUSCH is scheduled by DCI format 0_1, the UE determines a PUSCH transmission precoder based on the SRI, the Transmit Precoding Matrix Indicator (TPMI), and the transmission rank from the DCI as given by the SRS resource indicator and the Precoding information and number of layers field. The TPMI is used for indicating a precoder to be applied over the antenna port and when multiple SRS resources are configured, the TPMI corresponds to the SRS resource selected by the SRI. Alternatively, when the single SRS resource is configured, the TPMI is used for indicating the precoder to be applied over the antenna port and corresponds to the corresponding single SRS resource. A transmission precoder is selected from an uplink codebook having the same antenna port number as higher layer parameter "nrofSRS-Ports". When the UE is set to higher layer parameter "txConfig" set to "codebook", at least one SRS resource is configured in the UE. An SRI indicated in slot n is associated with most recent transmission of the SRS resource identified by the SRI and here, the SRS resource precedes PDCCH (i.e., slot n) carrying the SRI.

In the case of the non-codebook based transmission, the PUSCH may be scheduled by DCI format 0_0, DCI format 0_1, or semi-statically. When multiple SRS resources are configured, the UE may determine the PUSCH precoder and the transmission rank based on a wideband SRI and here, the SRI is given by the SRS resource indicator in the DCI or given by higher layer parameter "srs-ResourceIndicator". The UE may use one or multiple SRS resources for SRS transmission and here, the number of SRS resources may be configured for simultaneous transmission in the same RB based on the UE capability. Only one SRS port is configured for each SRS resource. Only one SRS resource may be configured to higher layer parameter "usage" set to "nonCodebook". The maximum number of SRS resources which may be configured for non-codebook based uplink transmission is 4. The SRI indicated in slot n is associated with most recent transmission of the SRS resource identified by the SRI and here, the SRS transmission precedes PDCCH (i.e., slot n) carrying the SRI.

The contents (the DMRS, the DL transmission/reception operation, etc.) described above may be applied in combination with methods proposed in the present disclosure to be described below or may be supplemented to clarify technical features of the methods proposed in the present disclosure. Methods to be described below are just distinguished for convenience of description and it is needless to say that some components of any one method may be substituted with some components of another method or may be applied in combination with each other.

In the present disclosure, 'port' and 'antenna port' may be interpreted as the same meaning. For example, a DMRS port means a DMRS antenna port, and vice versa.

In the present disclosure, 'DMRS' may mean 'DM-RS', and vice versa.

When scheduling one codeword to the UE in DMRS configuration, a specific DMRS port index is used/configured for SU only. As an example, if a specific DMRS port index is indicated/allocated to one UE, a remaining orthogonal DMRS port index(s) is(are) not associated with PDSCH transmission(s) to another UE(s). As an example, if a specific DMRS port index is indicated/allocated to one UE, a remaining orthogonal DMRS port index(s) within the CDM group(s) based on the indicated DMRS port index is(are) not associated with PDSCH transmission(s) to another UE(s). The specific DMRS port index may include one or more DMRS port indexes.

As described above, when a PDSCH is scheduled for one UE (the DMRS port(s) is indicated by the antenna port field of the DCI scheduling the PDSCH), the remaining orthogonal DMRS ports(s) other than the indicated DMRS port(s)/the remaining orthogonal DMRS port(s) within the indicated CDM group(s) may not be associated with the PDSCH transmission(s) to another UE(s).

When a specific DMRS port(s) is indicated for one UE as above, a case in which the PDSCH scheduling for another UE(s) is restricted may be referred to as follows in the present disclosure. The case may be expressed as "the specific DMRS port(s) is used for single UE (SU) only", "the specific DMRS port(s) is not used for multi-UEs (MUs)", or "MU restriction".

In the present disclosure, when the DMRS port index(es) corresponding to "SU only" are indicated, the remaining DMRS port index(es) other than the indicated DMRS port index(es) may be interpreted as "DMRS port index(es) that may not be used for scheduling of MU/multi-UEs".

In the present disclosure, that a specific DMRS port/port index may not be used for the MU may mean that the specific DMRS port/port index is used only for the SU. In addition, if a specific DMRS port/port index is indicated, it may mean that the remaining DMRS port/port index is not used for the MU.

In the present disclosure, the DMRS port indicated by the antenna port field of the DCI for scheduling of the PDSCH may be interpreted/replaced as the port, the antenna port, or the DMRS antenna port. As an example, the 'port' may be interpreted/replaced as the DMRS port, the antenna port, or the DMRS antenna port.

In the present disclosure, ports 0 to 15 may be interpreted/replaced as ports 1000 to 1015, and ports 0 to 23 may be interpreted/replaced as ports 1000 to 1023.

Ports supported for existing DMRS type 1/2 (DMRS configuration type 1/2) are as follows.

[1] In the case of a single symbol DMRS, i) ports 1000 to 1003 (type 1) or ii) ports 1000 to 1005 (type 2) are supported.
[2] In the case of a double symbol DMRS, i) ports 1000 to 1007 (type 1) or ii) ports 1000 to 1011 (type 2) are supported.

Ports supported for enhanced DMRS type 1/2 (DMRS configuration enhanced type 1/2) are as follows.

[1] In the case of a single symbol DMRS, i) ports 1000 to 1003 and 1008 to 1011 (type 1) or ii) ports 1000 to 1005 and 1012 to 1017 (type 2) are supported.
[2] In the case of a double symbol DMRS, i) ports 1000 to 1015 (type 1) or ii) ports 1000 to 1023 (type 2) are supported.

On the other hand, when two codewords are scheduled, all orthogonal DMRS ports for the PDSCH are used only for the SU.

In Rel-18, the number of orthogonal DMRS ports is doubled. That is, referring to Table 3 below, a maximum number of ports supported for the enhanced DMRS port/enhanced DMRS type is twice a maximum number of pots supported for the existing DMRS port/DMRS type. Depending on the increased number of DMRS ports, a change of the DMRS port(s) related to MU restriction (SU only) may be considered. The present disclosure proposes a method for flexibly utilizing more DMRS port combinations for the MU scheduling by deleting or reducing a restriction on an MU operation.

[Table 3]

| Agreement in RAN1#109e |
| --- |
| The maximum number of enhanced DMRS ports in Rel.18 is doubled from Rel.15 DMRS ports: |
| - For DMRS type 1, the max. number of enhanced DMRS ports in Rel.18 for PDSCH/PUSCH is |
| • Single symbol DMRS: 8 DMRS ports. |
| • Double symbol DMRS: 16 DMRS ports. |
| - For DMRS type 2, the max. number of enhanced DMRS ports in Rel.18 for PDSCH/PUSCH is |
| • Single symbol DMRS: 12 DMRS ports. |
| • Double symbol DMRS: 24 DMRS ports. |

(continued)

| Agreement in RAN1#110bis-e |
|---|
| For enhanced FD-OCC length for DMRS of PDSCH/PUSCH for Rel.18 eType 1 DMRS, support<br>• Opt. 1-2: Length 4 FD-OCC is applied to 4 REs of DMRS within a PRB or across consecutive PRBs within an CDM group |

Referring to the agreement in Table 3, it is agreed to double the maximum number of DMRS ports to increase the configurable DMRS port(s). Further, to this end, it is agreed to multiplex the increased DMRS ports by increasing the length of the frequency domain-orthogonal cover code (FD-OCC) previously defined. Specifically, the length of the FD-OCC is increased from 2 to 4. The doubled DMRS ports are multiplexed based on the corresponding FD-OCC.

For a newly supported enhanced DMRS port, antenna port tables (Table 5 to Table 12 below) defined for existing DMRS ports need to be newly created in consideration of SU-MIMO and MU-MIMO.

In particular, according to a legacy standard of R17 or lower, there is a port combination in which a specific port may not be used for the MU, but is used only for the SU. A port combination based on the enhanced DMRS type (Rel-18) also needs to be designed in consideration of an SU only port.

[Table 4]

| Rel.15_38.214 |
|---|
| For DM-RS configuration type 1,<br>    - if a UE is scheduled with one codeword and assigned with the antenna port mapping with indices of {2, 9, 10, 11 or 30} in Table 7.3.1.2.2-1 and Table 7.3.1.2.2-2 of Clause 7.3.1.2 of [5, TS 38.212], or<br>    - if a UE is scheduled with one codeword and assigned with the antenna port mapping with indices of {2, 9, 10, 11 or 12} in Table 7.3.1.2.2-1A and {2, 9, 10, 11, 30 or 31} in Table 7.3.1.2.2-2A of Clause 7.3.1.2 of [5, TS 38.212], or<br>    - if a UE is scheduled with two codewords,<br>the UE may assume that all the remaining orthogonal antenna ports are not associated with transmission of PDSCH to another UE.<br>For DM-RS configuration type 2,<br>    - if a UE is scheduled with one codeword and assigned with the antenna port mapping with indices of {2, 10 or 23} in Table 7.3.1.2.2-3 and Table 7.3.1.2.2-4 of Clause 7.3.1.2 of [5, TS38.212], or<br>    - if a UE is scheduled with one codeword and assigned with the antenna port mapping with indices of {2, 10, 23 or 24} in Table 7.3.1.2.2-3A and {2, 10, 23 or 58} in Table 7.3.1.2.2-4A of Clause 7.3.1.2 of [5, TS 38.212], or<br>    - if a UE is scheduled with two codewords,<br>the UE may assume that all the remaining orthogonal antenna ports are not associated with transmission of PDSCH to another UE. |

Referring to Table 4, an orthogonal DMRS port index corresponding to a specific DMRS field value (e.g., a value of an antenna port field in DCI for scheduling a PDSCH) when scheduling a UE with one codeword in DMRS configuration is used only for the SU (PDSCH scheduling for the MU is not possible). In other words, the remaining orthogonal DMRS ports other than the DMRS port indicated for the corresponding UE are not associated with transmission of the PDSCH to another UE.

When the UE is scheduled with two codewords, all orthogonal DMRS ports are not possible to be used for the MU, but are used for the SU only in the PDSCH transmission. Hereinafter, for convenience of description, the DMRS port index is denoted by an index, and the DMRS field value (the value of the antenna port field) is denoted by a value.

For DMRS type = 1 and max length = 1 in a legacy NR standard of R17 or lower, a DMRS port table (antenna port table) supports 4 ports (Table 5 and Table 6 below).

For DMRS type = 1, max length = 2, 8 ports are supported (Table 7 and Table 8 below).

For DMRS type = 2, max length = 1, 6 ports are supported (Table 9 and Table 10 below).

For DMRS type = 2, max length = 2, 12 ports are supported (Table 11 and Table 12 below).

[Table 5]

**Table 7.3.1.2-1: Antenna port(s) (1000 + DMRS port), *dmrs-Type*=1, *maxLength*=1**

| Value | One Codeword: Codeword 0 enabled, Codeword 1 disabled | |
| --- | --- | --- |
| | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12-15 | Reserved | Reserved |

[Table 6]

**Table 7.3.1.2-1A: Antenna port(s) (1000 + DMRS port), *dmrs-Type*=1, *maxLength*=1**

| Value | One Codeword: Codeword 0 enabled, Codeword 1 disabled | |
| --- | --- | --- |
| | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 2 | 0,2,3 |
| 13-15 | Reserved | Reserved |

[Table 7]

Table 7.3.1.2.2-2: Antenna port(s) (1000 + DMRS port), *dmrs-Type*=1, *maxLength*=2

| | One Codeword: Codeword 0 enabled, Codeword 1 disabled | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4- | reserve | reserved | reserved |

| | | | | 31 | d | | |
|---|---|---|---|---|---|---|---|
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2,3,6,7 | 2 | | | | |
| 30 | 2 | 0,2,4,6 | 2 | | | | |
| 31 | Reserved | Reserved | Reserved | | | | |

[Table 8]

| Table 7.3.1.2.2-2A: Antenna port(s) (1000 + DMRS port), *dmrs-Type*=1, *maxLength*=2 | | | | | | | |
|---|---|---|---|---|---|---|---|
| One Codeword: Codeword 0 enabled, Codeword 1 disabled | | | | Two Codewords: Codeword 0 enabled, Codeword 1 enabled | | | |
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4-31 | reserved | reserved | reserved |
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2,3,6,7 | 2 | | | | |
| 30 | 2 | 0,2,4,6 | 2 | | | | |
| 31 | 2 | 0,2,3 | 1 | | | | |

[Table 9]

**Table 7.3.1.2.2-3: Antenna port(s) (1000 + DMRS port), *dmrs-Type*=2, *maxLength*=1**

| | One codeword: Codeword 0 enabled, Codeword 1 disabled | | | Two codewords: Codeword 0 enabled, Codeword 1 enabled | |
|---|---|---|---|---|---|
| Value | Number of DMRS CDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2-31 | reserved | reserved |
| 3 | 2 | 0 | | | |
| 4 | 2 | 1 | | | |
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24-31 | Reserved | Reserved | | | |

[Table 10]

Table 7.3.1.2.2-3A: Antenna port(s) (1000 + DMRS port), *dmrs-Type=2, maxLength=1*

| One codeword: Codeword 0 enabled, Codeword 1 disabled | | | Two codewords: Codeword 0 enabled, Codeword 1 enabled | | |
|---|---|---|---|---|---|
| Value | Number of DMRS CDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2-31 | reserved | reserved |
| 3 | 2 | 0 | | | |
| 4 | 2 | 1 | | | |
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24 | 2 | 0,2,3 | | | |
| 25-31 | Reserved | Reserved | | | |

[Table 11]

Table 7.3.1.2.2-4: Antenna port(s) (1000 + DMRS port), *dmrs-Type=2, maxLength=2*

| One codeword: Codeword 0 enabled, Codeword 1 disabled | | | | Two Codewords: Codeword 0 enabled, Codeword 1 enabled | | | |
|---|---|---|---|---|---|---|---|
| Value | Number of | DMRS | Number of | Value | Number of | DMRS port(s) | Number of |

|  | DMRS CDM group(s) without data | port(s) | front-load symbols |  | DMRS CDM group(s) without data |  | front-load symbols |
|---|---|---|---|---|---|---|---|
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6-63 | Reserved | Reserved | Reserved |
| 7 | 2 | 0,1 | 1 |  |  |  |  |
| 8 | 2 | 2,3 | 1 |  |  |  |  |
| 9 | 2 | 0-2 | 1 |  |  |  |  |
| 10 | 2 | 0-3 | 1 |  |  |  |  |
| 11 | 3 | 0 | 1 |  |  |  |  |
| 12 | 3 | 1 | 1 |  |  |  |  |
| 13 | 3 | 2 | 1 |  |  |  |  |
| 14 | 3 | 3 | 1 |  |  |  |  |
| 15 | 3 | 4 | 1 |  |  |  |  |
| 16 | 3 | 5 | 1 |  |  |  |  |
| 17 | 3 | 0,1 | 1 |  |  |  |  |
| 18 | 3 | 2,3 | 1 |  |  |  |  |
| 19 | 3 | 4,5 | 1 |  |  |  |  |
| 20 | 3 | 0-2 | 1 |  |  |  |  |
| 21 | 3 | 3-5 | 1 |  |  |  |  |
| 22 | 3 | 0-3 | 1 |  |  |  |  |
| 23 | 2 | 0,2 | 1 |  |  |  |  |
| 24 | 3 | 0 | 2 |  |  |  |  |
| 25 | 3 | 1 | 2 |  |  |  |  |
| 26 | 3 | 2 | 2 |  |  |  |  |
| 27 | 3 | 3 | 2 |  |  |  |  |

| | | | | | | | |
|---|---|---|---|---|---|---|---|
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0,1 | 2 | | | | |
| 37 | 3 | 2,3 | 2 | | | | |
| 38 | 3 | 4,5 | 2 | | | | |
| 39 | 3 | 6,7 | 2 | | | | |
| 40 | 3 | 8,9 | 2 | | | | |
| 41 | 3 | 10,11 | 2 | | | | |
| 42 | 3 | 0,1,6 | 2 | | | | |
| 43 | 3 | 2,3,8 | 2 | | | | |
| 44 | 3 | 4,5,10 | 2 | | | | |
| 45 | 3 | 0,1,6,7 | 2 | | | | |
| 46 | 3 | 2,3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6,7 | 2 | | | | |
| 57 | 2 | 8,9 | 2 | | | | |
| 58-63 | Reserved | Reserved | Reserved | | | | |

[Table 12]

Table 7.3.1.2.2-4A: Antenna port(s) (1000 + DMRS port), *dmrs-Type*=2, *maxLength*=2

| | One codeword: Codeword 0 enabled, Codeword 1 disabled | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6-63 | Reserved | Reserved | Reserved |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0,1 | 1 | | | | |
| 18 | 3 | 2,3 | 1 | | | | |
| 19 | 3 | 4,5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0,2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |

| 29 | 3 | 5 | 2 | | | | |
|----|---|---|---|---|---|---|---|
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0,1 | 2 | | | | |
| 37 | 3 | 2,3 | 2 | | | | |

| 38 | 3 | 4,5 | 2 | | | | |
|----|---|-----|---|---|---|---|---|
| 39 | 3 | 6,7 | 2 | | | | |
| 40 | 3 | 8,9 | 2 | | | | |
| 41 | 3 | 10,11 | 2 | | | | |
| 42 | 3 | 0,1,6 | 2 | | | | |
| 43 | 3 | 2,3,8 | 2 | | | | |
| 44 | 3 | 4,5,10 | 2 | | | | |
| 45 | 3 | 0,1,6,7 | 2 | | | | |
| 46 | 3 | 2,3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6,7 | 2 | | | | |
| 57 | 2 | 8,9 | 2 | | | | |
| 58 | 2 | 0,2,3 | 1 | | | | |

| 59-63 | Reserved | Reserved | Reserved | | | | |
|-------|----------|----------|----------|---|---|---|---|

The enhanced DMRS type supported in Rel-18 supports 8 ports. As a specific example, based on (enhanced) DMRS type = 1 and max length = 1, the DMRS port table may support 8 ports. Table 13 below shows an antenna port table for the enhanced DMRS type. Antenna port tables defined for the increased DMRS ports may be classified into Cat. 1, Cat. 2, and Cat. 3.

Cat. 1 reuses the legacy antenna port table and Cat. 2 is designed by applying an offset to Cat. 1. Cat. 3 includes a port combination for simultaneously indicating ports respectively indicated by Cat. 1 and Cat. 2.

In this case, Cat. 1 to Cat. 3 are only references utilized to distinguish/refer to values of an antenna port field in a new antenna port table, and are not information actually defined in the antenna port table. For example, in Table 13, values 0 to 11 may be classified as first values of the antenna port field, values 12 to 23 may be classified as second values of the antenna port field, and values 24 to 29 may be classified as third values of the antenna port field.

[Table 13]

**Agreement in RAN1#111**

For the antenna ports indication in Rel.18 eType1 DMRS ports with maxLength = 1 for PDSCH, at least for S-TRP case, support the following rows of DMRS port combinations and Number of DMRS CDM group(s) without data.

- FFS: Antenna ports indication in Rel.18 eType1 DMRS ports with maxLength = 1 for PDSCH for M-TRP case.

Table 7.3.1.2.2-1-X: Antenna port(s) (1000 + DMRS port), *dmrs-Type*=eType1, *maxLength*=1

| One Codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Notes | Value | Number of DMRS CDM group(s) without data | DMRS port(s) | Notes |
| 0 | [1] | [0] | | [0] | [2] | [0,1,2,3,8] | |
| 1 | [1] | [1] | Cat. 1 | [1] | [2] | [0,1,2,3,8,10] | |
| 2 | [1] | [0,1] | | [2] | [2] | [0,1,2,3,8,9,10] | |
| 3 | 2 | 0 | | [3] | [2] | [0,1,2,3,8,9,10,11] | [Rank 5-8 with one DMRS symbol] |
| 4 | 2 | 1 | | | | | |
| 5 | 2 | 2 | | | | | |
| 6 | 2 | 3 | | | | | |
| 7 | 2 | 0,1 | | | | | |
| 8 | 2 | 2,3 | | | | | |
| 9 | [2] | [0-2] | | | | | |
| 10 | [2] | [0-3] | | | | | |
| 11 | [2] | [0,2] | | | | | |
| 12 | [1] | [8] | | | | | |
| 13 | [1] | [9] | | | | | |
| 14 | [1] | [8,9] | | | | | |
| 15 | 2 | 8 | | | | | |
| 16 | 2 | 9 | | | | | |
| 17 | 2 | 10 | Cat.2 | | | | |
| 18 | 2 | 11 | | | | | |
| 19 | 2 | 8,9 | | | | | |
| 20 | 2 | 10,11 | | | | | |
| 21 | [2] | [8-10] | | | | | |
| 22 | [2] | [8-11] | | | | | |
| 23 | [2] | [8, 10], [9, 11] | | | | | |

| 24 | [1] | [0,1,8] | | | | | | |
|----|-----|---------|-----|---|---|---|---|---|
| 25 | [1] | [0,1,8,9] | | | | | | |
| 26 | 2 | 0,1,8 | Cat.3 | | | | | |
| 27 | 2 | 0,1,8,9 | | | | | | |
| 28 | 2 | 2,3,10 | | | | | | |
| 29 | 2 | 2,3,10,11 | | | | | | |
| | | | | | | | | |
| | | | | | | | | |

A port combination of "[ ]" in a new table has been discussed in relation to the following. Specifically, a number of DMRS CDM group (s) without data =1 except for S-TRP, an M-TRP combination, and an MU-related discussion are conducted.

Changes in MU restrictions (i.e., changes in existing defined configurations/operations for MU restrictions) may be considered in accordance with doubled orthogonal DMRS ports. Hereinafter, the method for flexibly utilizing more DMRS port combinations for the MU scheduling by deleting or reducing restrictions on the MU operation will be specifically described.

<Proposal 1>

According to the existing defined operation, the port restricted to be used only for the SU is not scheduled for the MU (see Table 14 below). A new DMRS port table may be designed in consideration of the SU only port.

For DMRS configuration enhanced type 1, a DMRS port table (antenna port table) may be defined to include a value(s) based on at least one of indexes 8 to 11.

For DMRS configuration enhanced type 2, the antenna port table (DMRS port table) may be defined to include a value(s) based on at least one of indexes 12 to 15.

[Table 14]

| Legacy SU only ports (Unavailable DMRS field values for MU-MIMO) | | |
|---|---|---|
| | one codeword | two codeword |
| type 1 | value {2}: index {0, 1} with CDM group=1<br>value {9}: index {0, 1, 2}<br>value {10}: index {0, 1, 2, 3}<br>value {11 or 30}: index {0, 2} or {0, 2, 4, 6} | All values |
| type 2 | value {2}: index {0, 1} with CDM group=1<br>value {10}: index {0, 1, 2, 3}<br>value {23}: index {0, 2} | All values |

According to the existing defined operation (legacy NR standard) in Rel-17 or lower, a number of SU only ports based on the maximum number of orthogonal ports per UE in MU-MIMO is restricted according to an agreement in Table 15 below.

[Table 15]

| **Agreement in RAN1#90bis** |
|---|
| The maximum number of orthogonal ports per UE in MU-MIMO for<br><ul><li>DMRS configuration type 1 with 1-symbol DMRS<ul><li>2 for DL</li></ul></li><li>DMRS configuration type 1 with 2-symbol DMRS<ul><li>4 for DL</li></ul></li><li>DMRS configuration type 2 with 1-symbol DMRS<ul><li>4 for DL</li></ul></li><li>DMRS configuration type 2 with 2-symbol DMRS<ul><li>4 for DL</li></ul></li></ul> |

According to the existing operation (operation configured for the DMRS type), the index {0, 1, 2} is indicated based on the value {9}, and the index {0, 1, 2, 3} is indicated based on the value {10}. That is, ports (3 ports/4 ports) more than 2 ports are configured/indicated. The maximum number of orthogonal ports per UE in the MU-MIMO of type 1 with 1-symbol DMRS is 2, which is used only for the SU. That is, ports 0 to 2 or 0 to 3 indicated based on the values {9} and {10} in the new DMRS table may be used only for the SU.

The index {0, 1} is indicated based on the value {2}. In the case of the DMRS type, all ports that are enabled to be transmitted in the corresponding CDM group are indicated, and thus are used for the SU only. In the case of the enhanced DMRS type, the number of DMRS ports in the corresponding CDM group is doubled from 2 to 4, and thus the existing defined restriction (restriction on the DMRS type) may be released. That is, the value {2} in the new table does not need to be restricted to the SU only because only some of the transportable ports in the corresponding CDM group are indicated.

In the case of a legacy DMRS table (e.g., in the case of DMRS configuration type 1/2), if port index {0, 1} with CDM group = 1 is indicated to the UE, remaining ports other than the indicated ports are not associated with PDSCH transmission to another UE.

In the case of a new DMRS table (e.g., in the case of DMRS configuration enhanced type 1/2), if port index {0, 1} with CDM group = 1 is indicated, the UE may not assume that all remaining orthogonal ports are not associated with PDSCH transmission to another UE, or the UE may make no assumptions for all remaining orthogonal ports.

Index {0, 1} with CDM group = 1 based on the value {2} is enabled to be subjected to MU scheduling. In other words, in the case of enhanced DMRS type 1/2, remaining ports (e.g., ports 8 and 9) within the corresponding CDM group other than ports 0 and 1 with one CDM group indicated based on the value {2} may be associated with PDSCH transmission to another UE.

When the type of DMRS is enhanced DMRS type (1/2), the MU scheduling is restricted (value {2}: index {0, 1} with CDM group = 1 is excluded from MU scheduling restriction) as shown in Table 16 below.

Table 16 below shows MU scheduling restriction (SU only ports) for the enhanced DMRS type.

[Table 16]

| SU only ports (Unavailable DMRS field values for MU-MIMO) | | |
|---|---|---|
| | one codeword | two codeword |
| Enhanced type 1 | index {0, 1, 2}<br>index {0, 1, 2, 3}<br>index {0, 2} or {0, 2, 4, 6} | All values |
| Enhanced type 2 | index {0, 1, 2, 3}<br>index {0, 2} | All values |

<Proposal 2>

In the case of the DMRS type (e.g., legacy DMRS configuration of Rel-17 or lower), the DMRS is multiplexed to FD-OCC length 2. In the case of the DMRS type (e.g., enhanced DMRS configuration of Rel-18), the corresponding DMRS is multiplexed to FD-OCC length 4. In the case of the enhanced DMRS type, the number of orthogonal DMRS ports is doubled compared to the existing DMRS type, and the number of ports that may be indicated to the SU or the MU is also increased. A new DMRS port table may be designed in consideration of the increased ports (maximum number of orthogonal ports per UE).

In the case of the existing DMRS type, the maximum number of orthogonal ports (type 1 with 1-symbol DMRS) per UE in the MU-MIMO is 2.

In the case of the enhanced DMRS type, the maximum number of orthogonal ports (type 1 with 1-symbol DMRS) per UE in the MU-MIMO may be 4, which is twice the maximum number of orthogonal ports of the existing DMRS type.

For DMRS configuration enhanced type 1, the DMRS port table (antenna port table) may be defined to include a value(s) based on at least one of indexes 8 to 11.

For DMRS configuration enhanced type 2, the DMRS port table (antenna port table) may be defined to include a value(s) based on at least one of indexes 12 to 15.

Based on the legacy DMRS table/new DMRS table, port index {0, 1} with CDM group = 1 and port indexes {0, 1, 2} and {0, 1, 2, 3} may be indicated to the UE.

[1] In the case of the legacy DMRS table (e.g., in the case of DMRS configuration type 1/2), remaining ports other than the indicated ports are not associated with PDSCH transmission to another UE.

[2] In the case of the new DMRS table (e.g., in the case of DMRS configuration enhanced type 1/2), the UE may not assume that all remaining orthogonal ports are not associated with PDSCH transmission to another UE, or the UE may make no assumption for all remaining orthogonal ports.

In the case of port index {0, 1} with CDM group = 1 in the new table, only some of the transportable ports in the CDM group are indicated, and thus the MU scheduling is possible. In the case of indexes {0, 1, 2} and {0, 1, 2, 3} in the new table, the maximum number of orthogonal ports per UE does not exceed 4, so that the MU scheduling is possible.

Based on the increased maximum number of orthogonal ports per UE of the enhanced DMRS type as above, ports previously defined as SU only ports may be used for the MU. Table 17 shows the increased maximum number of orthogonal ports per UE of the enhanced DMRS type.

[Table 17]

| The maximum number of orthogonal ports per UE in MU-MIMO for |
|---|
| ■ DMRS configuration type 1 with 1-symbol DMRS |
| • 4 for DL |
| ■ DMRS configuration type 1 with 2-symbol DMRS |
| • 4 for DL |
| ■ DMRS configuration type 2 with 1-symbol DMRS |
| • 4 for DL |
| ■ DMRS configuration type 2 with 2-symbol DMRS |
| • 4 for DL |

Referring to Table 17, in the enhanced DMRS type, the maximum number of orthogonal ports per UE of the type 1 with 1-symbol DMRS is changed to 4 (e.g., in the case of the DMRS type, a maximum number of orthogonal ports per UE of the type 1 with 1-symbol DMRS is 2, see Table 15).

When the DMRS port is multiplexed to FD-OCC length 4 (in the case of the enhanced DMRS type), the MU scheduling is restricted (i.e., index {0, 1}, index {0, 1, 2}, and index {0, 1, 2, 3} are excluded from SU only ports) as shown in Table 18 below.

Table 18 below shows an MU scheduling restriction (SU only ports) for the enhanced DMRS type.

[Table 18]

| Cat. 1: SU only ports (Unavailable DMRS field values for MU-MIMO) | | |
|---|---|---|
| | one codeword | two codeword |
| Enhanced type 1 | index {0, 2} or {0, 2, 4, 6} | All values |
| Enhanced type 2 | index {0, 2} | All values |

In the case of index {0, 2}, it is possible to indicate one port per CDM group in a single symbol even in a new port table. For a SU UE, there is no descrambling issue for FD-OCC, and channel estimation is performed in units of an RE, so that channel estimation accuracy is enhanced in a frequency selective channel. Therefore, even when a per UE rank restriction of the MU is doubled, the legacy and the number of CDM groups are not changed, and thus the MU scheduling is restricted like legacy.

In the case of index {0, 2, 4, 6}, two ports are allocated per CDM group in the double symbol and are scrambling with TD-OCC. In the case of the SU UE, there is no descrambling issue for FD-OCC. The MU scheduling is restricted like the legacy, because the channel estimation is performed in units of the RE to enhance the channel estimation accuracy in the frequency selective channel.

The above-described examples are applied to the DMRS port index corresponding to Cat. 1.

In the operation for the DMRS port index corresponding to Cat. 2, offset 8 or offset 12 may be applied to the above-described examples (index {0, 1}, index {0, 1, 2}, and index {0, 1, 2, 3}).

For example, for enhanced DMRS type 1, at least one of the index {8, 9}, {8, 9, 10}, or {8, 9, 10, 11} may be excluded from the SU only ports (MU scheduling restriction).

For example, for enhanced DMRS type 2, at least one of the index {12, 13}, {12, 13, 14}, or {12, 13, 14, 15} may be excluded from the SU only ports (MU scheduling restriction).

<Proposal 3>

According to Cat. 1 or Cat. 2, Ranks 3 & 4 may not be indicated based on one CDM group. Cat. 3 is defined to indicate Ranks 3 & 4 based on one CDM group. Here, the rank may mean the number of layers, and the rank may be determined by the number of indicated ports (e.g., Rank 3 when 3 ports are indicated).

For example, in the case of CDM group 1 and 2 ports {0, 1} are indicated by Cat. 1, and 2 ports {8, 9} are indicated by Cat. 2. That is, according to Cat. 1/2, Rank 2 is indicated based on one CDM group.

Rank 4 configuration/indication based on one CDM group is possible by Cat. 3. Specifically, 4 ports {0, 1, 8, 9} based on the number of DMRS CDM group(s) without data = 1 may be indicated by Cat. 3.

Further, when the number of DMRS CDM group(s) without data = 2, it is possible to indicate Rank 4 based on two CDM groups by 4 ports {0, 1, 2, 3} in Cat. 1 and 4 ports {8, 9, 10, 11} in Cat. 2, respectively. It is possible to indicate Rank 8 based on two CDM groups by Cat. 3.

Specifically, 4 ports {0, 1, 8, 9} (CDM group 1) + 4 ports {2, 3, 10, 11} (CDM group 2) may be indicated by Cat. 3. That is, Rank 8 may be configured/indicated based on CDM groups 1 & 2 by Cat. 3.

However, if 4 ports {0, 1, 8, 9} of Cat. 3 are indicated when the number of DMRS CDM group(s) without data = 1, all ports that are enabled to be transmitted within the corresponding CDM group are indicated, so the ports are used for the SU only.

For DMRS configuration enhanced type 1, the DMRS port table (antenna port table) may be defined to include a value(s) based on at least one of indexes 8 to 11.

For DMRS configuration enhanced type 2, the DMRS port table (antenna port table) may be defined to include a value(s) based on at least one of indexes 12 to 15.

For DMRS port(s) in Cat. 3 & number of DMRS CDM group(s) without data = 2 in the new DMRS table, the maximum number of orthogonal ports in the case of type 1 with 1-symbol DMRS in the maximum number of the orthogonal ports per UE in the MU-MIMO is doubled (2 -> 4).

Values (e.g., values 26 and 27 in Table 13) may be defined in the new DMRS table where i) port index {0, 1, 8} with number of DMRS CDM group(s) without data = 2, and ii) port index {0, 1, 8, 9} with number of DMRS CDM group(s) without data = 2.

When i) above and/or ii) above are indicated to the UE, the UE may assume/operate as follows. A UE may not assume that the remaining ports other than the indicated ports (i) 0, 1, and 8 or ii) 0, 1, 8, and 9 are not associated with PDSCH transmission to another UE or the corresponding UE may make no assumption for the remaining ports other than the indicated ports. That is, when CDM group = 2, the indicated ports do not exceed 4 ports even if indexes {0, 1, 8} and {0, 1, 8, 9} are indicated, and thus the MU scheduling is possible.

Table 19 below shows an MU scheduling restriction (SU only ports) for the enhanced DMRS type.

[Table 19]

| Cat. 3: SU only ports (Unavailable DMRS field values for MU-MIMO) | | |
|---|---|---|
| | one codeword | two codeword |
| Enhanced type 1 | index {0, 1, 8, 9} with CDM group=1 | All values |
| Enhanced type 2 | index {0, 1, 12, 13} with CDM group=1 | All values |

If three or more ports are indicated based on Cat. 3 when the maximum number of orthogonal ports of type 1 with 1-symbol DMRS is not increased from 2 to 4 in the maximum number of the orthogonal ports per UE in the MU-MIMO, the MU scheduling is restricted. In other words, when the number of ports indicated based on Cat. 3 in the new DMRS table exceeds 2 (e.g., index {0, 1, 8}), MU scheduling for the remaining ports other than the indicated ports is restricted.

<Extension>

The DMRS port index indicated based on the above-described DMRS field value (the value of the antenna port field) may be matched to and applied to different values in the table.

A combination/association of at least one of Proposals 1 to 3 described above may be applied to the UE/base station operation. As an example, operations/configurations based on Proposals 1 and 2 may be applied to the UE/base station operation.

Whether the proposal is applied and factors used in the proposal may be configured/indicated by the base station to the UE through DCI/MAC-CE/RRC signaling. As an example, the base station may transmit configuration information related to the DMRS to the UE based on the RRC signaling. The type related to the DMRS may be determined as DMRS type 1/2 or enhanced DMRS type 1/2 based on the configuration information.

Information relating to whether the proposal being applied and the factors used in the proposal may be reported to the base station by the UE.

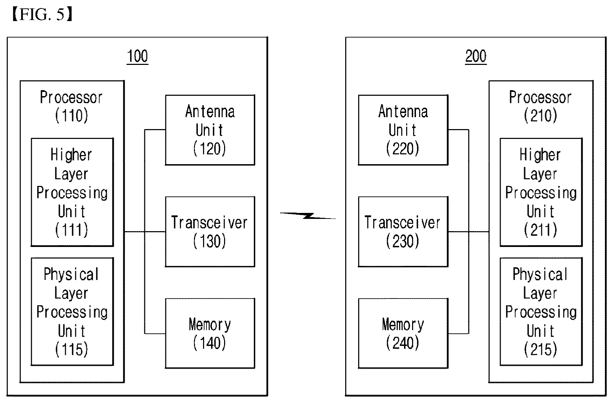

In terms of implementation, the operations (e.g., operations based on at least one of Proposals 1 to 3) of the base station/UE according to the above-described embodiments may be processed by devices (e.g., 100 and 200) in FIG. 5 to be described below.

Further, the operations (e.g., operations based on at least one of Proposals 1 to 3) of the base station/UE according to the above-described embodiment may be stored in memories (e.g., 140 and 240 in FIG. 5) in the form of an instruction/program (e.g., instruction or executable code) for driving at least one processor (e.g., 110 and 210 in FIG. 5).

The DMRS port table (antenna port table) based on at least one of Proposals 1 to 3 described above may be based on Tables 20 to 27 below.

[Table 20]

| Table 7.3.1.2.2-7: Antenna port(s) (1000 + DMRS port), *dmrs-Type*=1, *enhanced-dmrs-Type* is configured, *maxLength*=1 | | | | | |
|---|---|---|---|---|---|
| One Codeword: Codeword 0 enabled, Codeword 1 disabled | | | Two Codewords: Codeword 0 enabled, Codeword 1 enabled | | |
| Value | Number of DMRS CDM group(s) without data | DMRS port(s) | Value | Number of DMRS CDM group(s) without data | DMRS port(s) |
| 0 | 1 | 0 | 0 | 2 | 0,1,2,3,8 |
| 1 | 1 | 1 | 1 | 2 | 0,1,2,3,8,10 |
| 2 | 1 | 0,1 | 2 | 2 | 0,1,2,3,8,9,10 |
| 3 | 2 | 0 | 3 | 2 | 0,1,2,3,8,9,10,11 |
| 4 | 2 | 1 | 4-31 | Reserved | Reserved |

| | | | | | |
|---|---|---|---|---|---|
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 2 | 0,2 | | | |
| 12 | 1 | 8 | | | |
| 13 | 1 | 9 | | | |
| 14 | 1 | 8,9 | | | |
| 15 | 2 | 8 | | | |
| 16 | 2 | 9 | | | |
| 17 | 2 | 10 | | | |
| 18 | 2 | 11 | | | |
| 19 | 2 | 8,9 | | | |
| 20 | 2 | 10,11 | | | |
| 21 | 1 | 0,1,8 | | | |
| 22 | 1 | 0,1,8,9 | | | |
| 23 | 2 | 0,1,8 | | | |
| 24 | 2 | 0,1,8,9 | | | |
| 25 | 2 | 2,3,10 | | | |
| 26 | 2 | 2,3,10,11 | | | |
| 27-31 | Reserved | Reserved | | | |

[Table 21]

| Table 7.3.1.2.2-7A: Antenna port(s) (1000 + DMRS port), *dmrs-Type*=1, enhanced-dmrs-Type is configured, *maxLength*=1 | | | | | |
|---|---|---|---|---|---|
| One Codeword: Codeword 0 enabled, Codeword 1 disabled | | | Two Codewords: Codeword 0 enabled, Codeword 1 enabled | | |
| Value | Number of DMRS CDM group(s) without data | DMRS port(s) | Value | Number of DMRS CDM group(s) without data | DMRS port(s) |
| 0 | 1 | 0 | 0 | 2 | 0,1,2,3,8 |
| 1 | 1 | 1 | 1 | 2 | 0,1,2,3,8,10 |
| 2 | 1 | 0,1 | 2 | 2 | 0,1,2,3,8,9,10 |
| 3 | 2 | 0 | 3 | 2 | 0,1,2,3,8,9,10,11 |
| 4 | 2 | 1 | 4-31 | Reserved | Reserved |
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 2 | 0,2 | | | |
| 12 | 1 | 8 | | | |
| 13 | 1 | 9 | | | |
| 14 | 1 | 8,9 | | | |
| 15 | 2 | 8 | | | |
| 16 | 2 | 9 | | | |
| 17 | 2 | 10 | | | |
| 18 | 2 | 11 | | | |
| 19 | 2 | 8,9 | | | |
| 20 | 2 | 10,11 | | | |
| 21 | 1 | 0,1,8 | | | |
| 22 | 1 | 0,1,8,9 | | | |
| 23 | 2 | 0,1,8 | | | |
| 24 | 2 | 0,1,8,9 | | | |
| 25 | 2 | 2,3,10 | | | |
| 26 | 2 | 2,3,10,11 | | | |
| 27 | 2 | 0,2,3 | | | |
| 28-31 | Reserved | Reserved | | | |

[Table 22]

| Table 7.3.1.2.2-8: Antenna port(s) (1000 + DMRS port), *dmrs-Type*=1, *enhanced-dmrs-Type* is configured, *maxLength*=2 | | | | | | | |
|---|---|---|---|---|---|---|---|
| One Codeword: Codeword 0 enabled, Codeword 1 disabled | | | | Two Codewords: Codeword 0 enabled, Codeword 1 enabled | | | |
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0,1,2,3,8 | 1 |
| 1 | 1 | 1 | 1 | 1 | 2 | 0,1,2,3,8,10 | 1 |
| 2 | 1 | 0,1 | 1 | 2 | 2 | 0,1,2,3,8,9,10 | 1 |
| 3 | 2 | 0 | 1 | 3 | 2 | 0,1,2,3,8,9,10,11 | 1 |
| 4 | 2 | 1 | 1 | 4 | 2 | 0-4 | 2 |
| 5 | 2 | 2 | 1 | 5 | 2 | 0,1,2,3,4,6 | 2 |
| 6 | 2 | 3 | 1 | 6 | 2 | 0,1,2,3,4,5,6 | 2 |
| 7 | 2 | 0,1 | 1 | 7 | 2 | 0,1,2,3,4,5,6,7 | 2 |
| 8 | 2 | 2,3 | 1 | 8 | 1 | 0,1,4,5,8 | 2 |
| 9 | 2 | 0-2 | 1 | 9 | 1 | 0,1,4,5,8,12 | 2 |
| 10 | 2 | 0-3 | 1 | 10 | 1 | 0,1,4,5,8,9,12 | 2 |
| 11 | 2 | 0,2 | 1 | 11 | 1 | 0,1,4,5,8,9,12,13 | 2 |
| 12 | 1 | 8 | 1 | 12 | 2 | 0,1,4,5,8 | 2 |
| 13 | 1 | 9 | 1 | 13 | 2 | 0,1,4,5,8,12 | 2 |
| 14 | 1 | 8,9 | 1 | 14 | 2 | 0,1,4,5,8,9,12 | 2 |
| 15 | 2 | 8 | 1 | 15 | 2 | 0,1,4,5,8,9,12,13 | 2 |
| 16 | 2 | 9 | 1 | 16~127 | Reserved | Reserved | Reserved |
| 17 | 2 | 10 | 1 | | | | |
| 18 | 2 | 11 | 1 | | | | |
| 19 | 2 | 8,9 | 1 | | | | |
| 20 | 2 | 10,11 | 1 | | | | |
| 21 | 1 | 0,1,8 | 1 | | | | |
| 22 | 1 | 0,1,8,9 | 1 | | | | |
| 23 | 2 | 0,1,8 | 1 | | | | |
| 24 | 2 | 0,1,8,9 | 1 | | | | |
| 25 | 2 | 2,3,10 | 1 | | | | |
| 26 | 2 | 2,3,10,11 | 1 | | | | |
| 27 | 2 | 0 | 2 | | | | |
| 28 | 2 | 1 | 2 | | | | |
| 29 | 2 | 2 | 2 | | | | |
| 30 | 2 | 3 | 2 | | | | |
| 31 | 2 | 4 | 2 | | | | |
| 32 | 2 | 5 | 2 | | | | |

| 33 | 2 | 6 | 2 | | | | |
|---|---|---|---|---|---|---|---|
| 34 | 2 | 7 | 2 | | | | |
| 35 | 2 | 0,1 | 2 | | | | |
| 36 | 2 | 2,3 | 2 | | | | |
| 37 | 2 | 4,5 | 2 | | | | |
| 38 | 2 | 6,7 | 2 | | | | |
| 39 | 2 | 0,4 | 2 | | | | |
| 40 | 2 | 2,6 | 2 | | | | |
| 41 | 2 | 0,1,4 | 2 | | | | |
| 42 | 2 | 2,3,6 | 2 | | | | |
| 43 | 2 | 0,1,4,5 | 2 | | | | |
| 44 | 2 | 2,3,6,7 | 2 | | | | |
| 45 | 2 | 0,2,4,6 | 2 | | | | |
| 46 | 2 | 8 | 2 | | | | |
| 47 | 2 | 9 | 2 | | | | |
| 48 | 2 | 10 | 2 | | | | |
| 49 | 2 | 11 | 2 | | | | |
| 50 | 2 | 12 | 2 | | | | |
| 51 | 2 | 13 | 2 | | | | |
| 52 | 2 | 14 | 2 | | | | |
| 53 | 2 | 15 | 2 | | | | |
| 54 | 2 | 8,9 | 2 | | | | |
| 55 | 2 | 10,11 | 2 | | | | |
| 56 | 2 | 12,13 | 2 | | | | |
| 57 | 2 | 14,15 | 2 | | | | |
| 58 | 2 | 0,1,8 | 2 | | | | |
| 59 | 2 | 0,1,8,9 | 2 | | | | |
| 60 | 2 | 4,5,12 | 2 | | | | |
| 61 | 2 | 4,5,12,13 | 2 | | | | |
| 62 | 2 | 2,3,10 | 2 | | | | |
| 63 | 2 | 2,3,10,11 | 2 | | | | |
| 64 | 2 | 6,7,14 | 2 | | | | |
| 65 | 2 | 6,7,14,15 | 2 | | | | |
| 66-127 | Reserved | Reserved | Reserved | | | | |

[Table 23]

Table 7.3.1.2.2-8A: Antenna port(s) (1000 + DMRS port), *dmrs-Type*=1, *enhanced-dmrs-Type* is configured, *maxLength*=2

| One Codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0,1,2,3,8 | 1 |
| 1 | 1 | 1 | 1 | 1 | 2 | 0,1,2,3,8,10 | 1 |
| 2 | 1 | 0,1 | 1 | 2 | 2 | 0,1,2,3,8,9,10 | 1 |
| 3 | 2 | 0 | 1 | 3 | 2 | 0,1,2,3,8,9,10,11 | 1 |
| 4 | 2 | 1 | 1 | 4 | 2 | 0-4 | 2 |
| 5 | 2 | 2 | 1 | 5 | 2 | 0,1,2,3,4,6 | 2 |
| 6 | 2 | 3 | 1 | 6 | 2 | 0,1,2,3,4,5,6 | 2 |
| 7 | 2 | 0,1 | 1 | 7 | 2 | 0,1,2,3,4,5,6,7 | 2 |
| 8 | 2 | 2,3 | 1 | 8 | 1 | 0,1,4,5,8 | 2 |
| 9 | 2 | 0-2 | 1 | 9 | 1 | 0,1,4,5,8,12 | 2 |
| 10 | 2 | 0-3 | 1 | 10 | 1 | 0,1,4,5,8,9,12 | 2 |
| 11 | 2 | 0,2 | 1 | 11 | 1 | 0,1,4,5,8,9,12,13 | 2 |
| 12 | 1 | 8 | 1 | 12 | 2 | 0,1,4,5,8 | 2 |
| 13 | 1 | 9 | 1 | 13 | 2 | 0,1,4,5,8,12 | 2 |
| 14 | 1 | 8,9 | 1 | 14 | 2 | 0,1,4,5,8,9,12 | 2 |
| 15 | 2 | 8 | 1 | 15 | 2 | 0,1,4,5,8,9,12,13 | 2 |
| 16 | 2 | 9 | 1 | 16~127 | Reserved | Reserved | Reserved |
| 17 | 2 | 10 | 1 | | | | |
| 18 | 2 | 11 | 1 | | | | |
| 19 | 2 | 8,9 | 1 | | | | |
| 20 | 2 | 10,11 | 1 | | | | |
| 21 | 1 | 0,1,8 | 1 | | | | |
| 22 | 1 | 0,1,8,9 | 1 | | | | |
| 23 | 2 | 0,1,8 | 1 | | | | |
| 24 | 2 | 0,1,8,9 | 1 | | | | |
| 25 | 2 | 2,3,10 | 1 | | | | |
| 26 | 2 | 2,3,10,11 | 1 | | | | |
| 27 | 2 | 0 | 2 | | | | |
| 28 | 2 | 1 | 2 | | | | |
| 29 | 2 | 2 | 2 | | | | |
| 30 | 2 | 3 | 2 | | | | |
| 31 | 2 | 4 | 2 | | | | |
| 32 | 2 | 5 | 2 | | | | |

| 33 | 2 | 6 | 2 | | | | |
|---|---|---|---|---|---|---|---|
| 34 | 2 | 7 | 2 | | | | |
| 35 | 2 | 0,1 | 2 | | | | |
| 36 | 2 | 2,3 | 2 | | | | |

| 37 | 2 | 4,5 | 2 | | | | |
|---|---|---|---|---|---|---|---|
| 38 | 2 | 6,7 | 2 | | | | |
| 39 | 2 | 0,4 | 2 | | | | |
| 40 | 2 | 2,6 | 2 | | | | |
| 41 | 2 | 0,1,4 | 2 | | | | |
| 42 | 2 | 2,3,6 | 2 | | | | |
| 43 | 2 | 0,1,4,5 | 2 | | | | |
| 44 | 2 | 2,3,6,7 | 2 | | | | |
| 45 | 2 | 0,2,4,6 | 2 | | | | |
| 46 | 2 | 8 | 2 | | | | |
| 47 | 2 | 9 | 2 | | | | |
| 48 | 2 | 10 | 2 | | | | |
| 49 | 2 | 11 | 2 | | | | |
| 50 | 2 | 12 | 2 | | | | |
| 51 | 2 | 13 | 2 | | | | |
| 52 | 2 | 14 | 2 | | | | |
| 53 | 2 | 15 | 2 | | | | |
| 54 | 2 | 8,9 | 2 | | | | |
| 55 | 2 | 10,11 | 2 | | | | |
| 56 | 2 | 12,13 | 2 | | | | |
| 57 | 2 | 14,15 | 2 | | | | |
| 58 | 2 | 0,1,8 | 2 | | | | |
| 59 | 2 | 0,1,8,9 | 2 | | | | |
| 60 | 2 | 4,5,12 | 2 | | | | |
| 61 | 2 | 4,5,12,13 | 2 | | | | |
| 62 | 2 | 2,3,10 | 2 | | | | |
| 63 | 2 | 2,3,10,11 | 2 | | | | |
| 64 | 2 | 6,7,14 | 2 | | | | |
| 65 | 2 | 6,7,14,15 | 2 | | | | |
| 66 | 2 | 0,2,3 | 1 | | | | |
| 67-127 | Reserved | Reserved | Reserved | | | | |

[Table 24]

Table 7.3.1.2.2-9: Antenna port(s) (1000 + DMRS port), *dmrs-Type*=2, *enhanced-dmrs-Type* is configured, *maxLength*=1

| One codeword: Codeword 0 enabled, Codeword 1 disabled | | | Two codewords: Codeword 0 enabled, Codeword 1 enabled | | |
|---|---|---|---|---|---|
| Value | Number of DMRS CDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2 | 2 | 0,1,2,3,12 |
| 3 | 2 | 0 | 3 | 2 | 0,1,2,3,12,14 |
| 4 | 2 | 1 | 4 | 2 | 0-3,12-14 |
| 5 | 2 | 2 | 5 | 2 | 0-3,12-15 |
| 6 | 2 | 3 | 6 | 3 | 0,1,2,3,12 |
| 7 | 2 | 0,1 | 7 | 3 | 0,1,2,3,12,14 |
| 8 | 2 | 2,3 | 8 | 3 | 0-3,12-14 |
| 9 | 2 | 0-2 | 9 | 3 | 0-3,12-15 |
| 10 | 2 | 0-3 | 10~63 | Reserved | Reserved |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24 | 1 | 12 | | | |
| 25 | 1 | 13 | | | |
| 26 | 1 | 12,13 | | | |
| 27 | 2 | 12 | | | |
| 28 | 2 | 13 | | | |
| 29 | 2 | 14 | | | |
| 30 | 2 | 15 | | | |
| 31 | 2 | 12,13 | | | |
| 32 | 2 | 14,15 | | | |
| 33 | 3 | 12 | | | |
| 34 | 3 | 13 | | | |
| 35 | 3 | 14 | | | |

| 36 | 3 | 15 | | | |
|---|---|---|---|---|---|
| 37 | 3 | 16 | | | |
| 38 | 3 | 17 | | | |
| 39 | 3 | 12,13 | | | |
| 40 | 3 | 14,15 | | | |
| 41 | 3 | 16,17 | | | |
| 42 | 1 | 0,1,12 | | | |
| 43 | 1 | 0,1,12,13 | | | |
| 44 | 2 | 0,1,12 | | | |
| 45 | 2 | 0,1,12,13 | | | |
| 46 | 2 | 2,3,14 | | | |
| 47 | 2 | 2,3,14,15 | | | |
| 48 | 3 | 0,1,12 | | | |
| 49 | 3 | 0,1,12,13 | | | |
| 50 | 3 | 2,3,14 | | | |
| 51 | 3 | 2,3,14,15 | | | |
| 52 | 3 | 4,5,16 | | | |
| 53 | 3 | 4,5,16,17 | | | |
| 54- | Reserved | Reserve | | | |
| 63 | | d | | | |

[Table 25]

Table 7.3.1.2.2-9A: Antenna port(s) (1000 + DMRS port), *dmrs-Type*=2, *enhanced-dmrs-Type* is configured, *maxLength*=1

| One codeword: Codeword 0 enabled, Codeword 1 disabled | | | Two codewords: Codeword 0 enabled, Codeword 1 enabled | | |
|---|---|---|---|---|---|
| Value | Number of DMRS CDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2 | 2 | 0,1,2,3,12 |
| 3 | 2 | 0 | 3 | 2 | 0,1,2,3,12, 14 |
| 4 | 2 | 1 | 4 | 2 | 0-3,12-14 |
| 5 | 2 | 2 | 5 | 2 | 0-3,12-15 |
| 6 | 2 | 3 | 6 | 3 | 0,1,2,3,12 |
| 7 | 2 | 0,1 | 7 | 3 | 0,1,2,3,12, 14 |
| 8 | 2 | 2,3 | 8 | 3 | 0-3,12-14 |
| 9 | 2 | 0-2 | 9 | 3 | 0-3,12-15 |
| 10 | 2 | 0-3 | 10~63 | Reserved | Reserved |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24 | 1 | 12 | | | |
| 25 | 1 | 13 | | | |
| 26 | 1 | 12,13 | | | |
| 27 | 2 | 12 | | | |
| 28 | 2 | 13 | | | |
| 29 | 2 | 14 | | | |
| 30 | 2 | 15 | | | |
| 31 | 2 | 12,13 | | | |
| 32 | 2 | 14,15 | | | |
| 33 | 3 | 12 | | | |
| 34 | 3 | 13 | | | |
| 35 | 3 | 14 | | | |
| 36 | 3 | 15 | | | |
| 37 | 3 | 16 | | | |
| 38 | 3 | 17 | | | |

| 39 | 3 | 12,13 | | | |
|---|---|---|---|---|---|
| 40 | 3 | 14,15 | | | |
| 41 | 3 | 16,17 | | | |
| 42 | 1 | 0,1,12 | | | |
| 43 | 1 | 0,1,12,13 | | | |
| 44 | 2 | 0,1,12 | | | |
| 45 | 2 | 0,1,12,13 | | | |
| 46 | 2 | 2,3,14 | | | |
| 47 | 2 | 2,3,14,15 | | | |
| 48 | 3 | 0,1,12 | | | |
| 49 | 3 | 0,1,12,13 | | | |
| 50 | 3 | 2,3,14 | | | |
| 51 | 3 | 2,3,14,15 | | | |
| 52 | 3 | 4,5,16 | | | |
| 53 | 3 | 4,5,16,17 | | | |
| 54 | 2 | 0,2,3 | | | |
| 55-63 | Reserved | Reserved | | | |

[Table 26]

Table 7.3.1.2.2-10: Antenna port(s) (1000 + DMRS port), *dmrs-Type*=2, *enhanced-dmrs-Type* is configured, *maxLength*=2

| One codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,12 | 1 |
| 3 | 2 | 0 | 1 | 3 | 2 | 0-3,12,14 | 1 |
| 4 | 2 | 1 | 1 | 4 | 2 | 0-3,12-14 | 1 |
| 5 | 2 | 2 | 1 | 5 | 2 | 0-3,12-15 | 1 |
| 6 | 2 | 3 | 1 | 6 | 3 | 0,1,2,3,12 | 1 |
| 7 | 2 | 0,1 | 1 | 7 | 3 | 0-3,12,14 | 1 |
| 8 | 2 | 2,3 | 1 | 8 | 3 | 0-3,12-14 | 1 |
| 9 | 2 | 0-2 | 1 | 9 | 3 | 0-3,12-15 | 1 |
| 10 | 2 | 0-3 | 1 | 10 | 2 | 0,1,2,3,6 | 2 |
| 11 | 3 | 0 | 1 | 11 | 2 | 0,1,2,3,6,8 | 2 |
| 12 | 3 | 1 | 1 | 12 | 2 | 0,1,2,3,6,7,8 | 2 |
| 13 | 3 | 2 | 1 | 13 | 2 | 0,1,2,3,6,7,8,9 | 2 |

| 14 | 3 | 3 | 1 | 14 | 1 | 0,1,6,7,12 | 2 | |
|---|---|---|---|---|---|---|---|---|
| 15 | 3 | 4 | 1 | 15 | 1 | 0,1,6,7,12,18 | 2 | |
| 16 | 3 | 5 | 1 | 16 | 1 | 0,1,6,7,12,13,18 | 2 | |
| 17 | 3 | 0,1 | 1 | 17 | 1 | 0,1,6,7,12,13,18,19 | 2 | |
| 18 | 3 | 2,3 | 1 | 18 | 2 | 0,1,6,7,12 | 2 | |
| 19 | 3 | 4,5 | 1 | 19 | 2 | 0,1,6,7,12,18 | 2 | |
| 20 | 3 | 0-2 | 1 | 20 | 2 | 0,1,6,7,12,13,18 | 2 | |
| 21 | 3 | 3-5 | 1 | 21 | 2 | 0,1,6,7,12,13,18,19 | 2 | |
| 22 | 3 | 0-3 | 1 | 22 | 3 | 0,1,6,7,12 | 2 | |
| 23 | 2 | 0,2 | 1 | 23 | 3 | 0,1,6,7,12,18 | 2 | |
| 24 | 1 | 12 | 1 | 24 | 3 | 0,1,6,7,12,13,18 | 2 | |
| 25 | 1 | 13 | 1 | 25 | 3 | 0,1,6,7,12,13,18,19 | 2 | |
| 26 | 1 | 12,13 | 1 | 26~255 | Reserved | Reserved | Reserved | |
| 27 | 2 | 12 | 1 | | | | | |
| 28 | 2 | 13 | 1 | | | | | |
| 29 | 2 | 14 | 1 | | | | | |
| 30 | 2 | 15 | 1 | | | | | |
| 31 | 2 | 12,13 | 1 | | | | | |
| 32 | 2 | 14,15 | 1 | | | | | |

| 33 | 3 | 12 | 1 | | | | |
|----|---|-----|---|---|---|---|---|
| 34 | 3 | 13 | 1 | | | | |
| 35 | 3 | 14 | 1 | | | | |
| 36 | 3 | 15 | 1 | | | | |
| 37 | 3 | 16 | 1 | | | | |
| 38 | 3 | 17 | 1 | | | | |
| 39 | 3 | 12,13 | 1 | | | | |
| 40 | 3 | 14,15 | 1 | | | | |
| 41 | 3 | 16,17 | 1 | | | | |
| 42 | 1 | 0,1,12 | 1 | | | | |
| 43 | 1 | 0,1,12, 13 | 1 | | | | |
| 44 | 2 | 0,1,12 | 1 | | | | |
| 45 | 2 | 0,1,12, 13 | 1 | | | | |
| 46 | 2 | 2,3,14 | 1 | | | | |
| 47 | 2 | 2,3,14, 15 | 1 | | | | |
| 48 | 3 | 0,1,12 | 1 | | | | |
| 49 | 3 | 0,1,12, 13 | 1 | | | | |
| 50 | 3 | 2,3,14 | 1 | | | | |
| 51 | 3 | 2,3,14, 15 | 1 | | | | |
| 52 | 3 | 4,5,16 | 1 | | | | |
| 53 | 3 | 4,5,16, 17 | 1 | | | | |
| 54 | 3 | 0 | 2 | | | | |

| | | | | | | | | |
|---|---|---|---|---|---|---|---|---|
| 55 | 3 | 1 | 2 | | | | | |
| 56 | 3 | 2 | 2 | | | | | |
| 57 | 3 | 3 | 2 | | | | | |
| 58 | 3 | 4 | 2 | | | | | |
| 59 | 3 | 5 | 2 | | | | | |
| 60 | 3 | 6 | 2 | | | | | |
| 61 | 3 | 7 | 2 | | | | | |
| 62 | 3 | 8 | 2 | | | | | |
| 63 | 3 | 9 | 2 | | | | | |
| 64 | 3 | 10 | 2 | | | | | |
| 65 | 3 | 11 | 2 | | | | | |
| 66 | 3 | 0,1 | 2 | | | | | |
| 67 | 3 | 2,3 | 2 | | | | | |
| 68 | 3 | 4,5 | 2 | | | | | |
| 69 | 3 | 6,7 | 2 | | | | | |
| 70 | 3 | 8,9 | 2 | | | | | |
| 71 | 3 | 10,11 | 2 | | | | | |
| 72 | 3 | 0,1,6 | 2 | | | | | |
| 73 | 3 | 2,3,8 | 2 | | | | | |
| 74 | 3 | 4,5,10 | 2 | | | | | |
| 75 | 3 | 0,1,6,7 | 2 | | | | | |
| 76 | 3 | 2,3,8,9 | 2 | | | | | |
| 77 | 3 | 4,5,10,11 | 2 | | | | | |
| 78 | 1 | 0 | 2 | | | | | |
| 79 | 1 | 1 | 2 | | | | | |

| | | | | | | | |
|---|---|---|---|---|---|---|---|
| 80 | 1 | 6 | 2 | | | | |
| 81 | 1 | 7 | 2 | | | | |
| 82 | 1 | 0,1 | 2 | | | | |
| 83 | 1 | 6,7 | 2 | | | | |
| 84 | 2 | 0,1 | 2 | | | | |
| 85 | 2 | 2,3 | 2 | | | | |
| 86 | 2 | 6,7 | 2 | | | | |
| 87 | 2 | 8,9 | 2 | | | | |
| 88 | 3 | 12 | 2 | | | | |
| 89 | 3 | 13 | 2 | | | | |
| 90 | 3 | 14 | 2 | | | | |
| 91 | 3 | 15 | 2 | | | | |
| 92 | 3 | 16 | 2 | | | | |
| 93 | 3 | 17 | 2 | | | | |
| 94 | 3 | 18 | 2 | | | | |
| 95 | 3 | 19 | 2 | | | | |
| 96 | 3 | 20 | 2 | | | | |
| 97 | 3 | 21 | 2 | | | | |
| 98 | 3 | 22 | 2 | | | | |
| 99 | 3 | 23 | 2 | | | | |
| 100 | 3 | 12,13 | 2 | | | | |
| 101 | 3 | 14,15 | 2 | | | | |
| 102 | 3 | 16,17 | 2 | | | | |
| 103 | 3 | 18,19 | 2 | | | | |
| 104 | 3 | 20,21 | 2 | | | | |
| 105 | 3 | 22,23 | 2 | | | | |
| 106 | 1 | 12 | 2 | | | | |
| 107 | 1 | 13 | 2 | | | | |
| 108 | 1 | 18 | 2 | | | | |
| 109 | 1 | 19 | 2 | | | | |
| 110 | 1 | 12,13 | 2 | | | | |
| 111 | 1 | 18,19 | 2 | | | | |
| 112 | 2 | 12,13 | 2 | | | | |
| 113 | 2 | 14,15 | 2 | | | | |
| 114 | 2 | 18,19 | 2 | | | | |
| 115 | 2 | 20,21 | 2 | | | | |
| 116 | 2 | 0,1,12 | 2 | | | | |
| 117 | 2 | 0,1,12,13 | 2 | | | | |
| 118 | 2 | 6,7,18 | 2 | | | | |
| 119 | 2 | 6,7,18,19 | 2 | | | | |
| 120 | 2 | 2,3,14 | 2 | | | | |
| 121 | 2 | 2,3,14,15 | 2 | | | | |
| 122 | 2 | 8,9,20 | 2 | | | | |
| 123 | 2 | 8,9,20,21 | 2 | | | | |
| 124 | 3 | 0,1,12 | 2 | | | | |
| 125 | 3 | 0,1,12,13 | 2 | | | | |
| 126 | 3 | 6,7,18 | 2 | | | | |

44

| 127 | 3 | 6,7,18, 19 | 2 | | | | | |
|---|---|---|---|---|---|---|---|---|
| 128 | 3 | 2,3,14 | 2 | | | | | |
| 129 | 3 | 2,3,14, 15 | 2 | | | | | |
| 130 | 3 | 8,9,20 | 2 | | | | | |
| 131 | 3 | 8,9,20, 21 | 2 | | | | | |
| 132 | 3 | 4,5,16 | 2 | | | | | |
| 133 | 3 | 4,5,16, 17 | 2 | | | | | |
| 134 | 3 | 10,11, 22 | 2 | | | | | |
| 135 | 3 | 10,11, 22,23 | 2 | | | | | |
| 136-255 | Reserved | Reserved | Reserved | | | | | |

[Table 27]

| Table 7.3.1.2.2-10A: Antenna port(s) (1000 + DMRS port), *dmrs-Type*=2, *enhanced-dmrs-Type* is configured, *maxLength*=2 |
|---|

EP 4 664 812 A1

| One codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,12 | 1 |
| 3 | 2 | 0 | 1 | 3 | 2 | 0-3,12,14 | 1 |
| 4 | 2 | 1 | 1 | 4 | 2 | 0-3,12-14 | 1 |
| 5 | 2 | 2 | 1 | 5 | 2 | 0-3,12-15 | 1 |
| 6 | 2 | 3 | 1 | 6 | 3 | 0,1,2,3,12 | 1 |
| 7 | 2 | 0,1 | 1 | 7 | 3 | 0-3,12,14 | 1 |
| 8 | 2 | 2,3 | 1 | 8 | 3 | 0-3,12-14 | 1 |
| 9 | 2 | 0-2 | 1 | 9 | 3 | 0-3,12-15 | 1 |
| 10 | 2 | 0-3 | 1 | 10 | 2 | 0,1,2,3,6 | 2 |
| 11 | 3 | 0 | 1 | 11 | 2 | 0,1,2,3,6,8 | 2 |
| 12 | 3 | 1 | 1 | 12 | 2 | 0,1,2,3,6,7,8 | 2 |
| 13 | 3 | 2 | 1 | 13 | 2 | 0,1,2,3,6,7,8,9 | 2 |
| 14 | 3 | 3 | 1 | 14 | 1 | 0,1,6,7,12 | 2 |
| 15 | 3 | 4 | 1 | 15 | 1 | 0,1,6,7,12,18 | 2 |
| 16 | 3 | 5 | 1 | 16 | 1 | 0,1,6,7,12,13,18 | 2 |
| 17 | 3 | 0,1 | 1 | 17 | 1 | 0,1,6,7,12,13,18,19 | 2 |
| 18 | 3 | 2,3 | 1 | 18 | 2 | 0,1,6,7,12 | 2 |
| 19 | 3 | 4,5 | 1 | 19 | 2 | 0,1,6,7,12,18 | 2 |
| 20 | 3 | 0-2 | 1 | 20 | 2 | 0,1,6,7,12,13,18 | 2 |
| 21 | 3 | 3-5 | 1 | 21 | 2 | 0,1,6,7,12,13,18,19 | 2 |
| 22 | 3 | 0-3 | 1 | 22 | 3 | 0,1,6,7,12 | 2 |
| 23 | 2 | 0,2 | 1 | 23 | 3 | 0,1,6,7,12,18 | 2 |
| 24 | 1 | 12 | 1 | 24 | 3 | 0,1,6,7,12,13,18 | 2 |
| 25 | 1 | 13 | 1 | 25 | 3 | 0,1,6,7,12,13,18,19 | 2 |
| 26 | 1 | 12,13 | 1 | 26~255 | Reserved | Reserved | Reserved |
| 27 | 2 | 12 | 1 | | | | |
| 28 | 2 | 13 | 1 | | | | |
| 29 | 2 | 14 | 1 | | | | |
| 30 | 2 | 15 | 1 | | | | |
| 31 | 2 | 12,13 | 1 | | | | |
| 32 | 2 | 14,15 | 1 | | | | |

| 33 | 3 | 12 | 1 | | | | | |
| 34 | 3 | 13 | 1 | | | | | |
| 35 | 3 | 14 | 1 | | | | | |

| 36 | 3 | 15 | 1 | | | | |
|---|---|---|---|---|---|---|---|
| 37 | 3 | 16 | 1 | | | | |
| 38 | 3 | 17 | 1 | | | | |
| 39 | 3 | 12,13 | 1 | | | | |
| 40 | 3 | 14,15 | 1 | | | | |
| 41 | 3 | 16,17 | 1 | | | | |
| 42 | 1 | 0,1,12 | 1 | | | | |
| 43 | 1 | 0,1,12, 13 | 1 | | | | |
| 44 | 2 | 0,1,12 | 1 | | | | |
| 45 | 2 | 0,1,12, 13 | 1 | | | | |
| 46 | 2 | 2,3,14 | 1 | | | | |
| 47 | 2 | 2,3,14, 15 | 1 | | | | |
| 48 | 3 | 0,1,12 | 1 | | | | |
| 49 | 3 | 0,1,12, 13 | 1 | | | | |
| 50 | 3 | 2,3,14 | 1 | | | | |
| 51 | 3 | 2,3,14, 15 | 1 | | | | |
| 52 | 3 | 4,5,16 | 1 | | | | |
| 53 | 3 | 4,5,16, 17 | 1 | | | | |
| 54 | 3 | 0 | 2 | | | | |
| 55 | 3 | 1 | 2 | | | | |
| 56 | 3 | 2 | 2 | | | | |
| 57 | 3 | 3 | 2 | | | | |
| 58 | 3 | 4 | 2 | | | | |
| 59 | 3 | 5 | 2 | | | | |
| 60 | 3 | 6 | 2 | | | | |
| 61 | 3 | 7 | 2 | | | | |
| 62 | 3 | 8 | 2 | | | | |
| 63 | 3 | 9 | 2 | | | | |
| 64 | 3 | 10 | 2 | | | | |
| 65 | 3 | 11 | 2 | | | | |
| 66 | 3 | 0,1 | 2 | | | | |
| 67 | 3 | 2,3 | 2 | | | | |
| 68 | 3 | 4,5 | 2 | | | | |
| 69 | 3 | 6,7 | 2 | | | | |
| 70 | 3 | 8,9 | 2 | | | | |
| 71 | 3 | 10,11 | 2 | | | | |
| 72 | 3 | 0,1,6 | 2 | | | | |
| 73 | 3 | 2,3,8 | 2 | | | | |
| 74 | 3 | 4,5,10 | 2 | | | | |
| 75 | 3 | 0,1,6,7 | 2 | | | | |
| 76 | 3 | 2,3,8,9 | 2 | | | | |
| 77 | 3 | 4,5,10, 11 | 2 | | | | |
| 78 | 1 | 0 | 2 | | | | |
| 79 | 1 | 1 | 2 | | | | |

| 80 | 1 | 6 | 2 | | | | |
|---|---|---|---|---|---|---|---|
| 81 | 1 | 7 | 2 | | | | |

| 82 | 1 | 0,1 | 2 | | | | |
|---|---|---|---|---|---|---|---|
| 83 | 1 | 6,7 | 2 | | | | |
| 84 | 2 | 0,1 | 2 | | | | |
| 85 | 2 | 2,3 | 2 | | | | |
| 86 | 2 | 6,7 | 2 | | | | |
| 87 | 2 | 8,9 | 2 | | | | |
| 88 | 3 | 12 | 2 | | | | |
| 89 | 3 | 13 | 2 | | | | |
| 90 | 3 | 14 | 2 | | | | |
| 91 | 3 | 15 | 2 | | | | |
| 92 | 3 | 16 | 2 | | | | |
| 93 | 3 | 17 | 2 | | | | |
| 94 | 3 | 18 | 2 | | | | |
| 95 | 3 | 19 | 2 | | | | |
| 96 | 3 | 20 | 2 | | | | |
| 97 | 3 | 21 | 2 | | | | |
| 98 | 3 | 22 | 2 | | | | |
| 99 | 3 | 23 | 2 | | | | |
| 100 | 3 | 12,13 | 2 | | | | |
| 101 | 3 | 14,15 | 2 | | | | |
| 102 | 3 | 16,17 | 2 | | | | |
| 103 | 3 | 18,19 | 2 | | | | |
| 104 | 3 | 20,21 | 2 | | | | |
| 105 | 3 | 22,23 | 2 | | | | |
| 106 | 1 | 12 | 2 | | | | |
| 107 | 1 | 13 | 2 | | | | |
| 108 | 1 | 18 | 2 | | | | |
| 109 | 1 | 19 | 2 | | | | |
| 110 | 1 | 12,13 | 2 | | | | |
| 111 | 1 | 18,19 | 2 | | | | |
| 112 | 2 | 12,13 | 2 | | | | |
| 113 | 2 | 14,15 | 2 | | | | |
| 114 | 2 | 18,19 | 2 | | | | |
| 115 | 2 | 20,21 | 2 | | | | |
| 116 | 2 | 0,1,12 | 2 | | | | |
| 117 | 2 | 0,1,12,13 | 2 | | | | |
| 118 | 2 | 6,7,18 | 2 | | | | |
| 119 | 2 | 6,7,18,19 | 2 | | | | |
| 120 | 2 | 2,3,14 | 2 | | | | |
| 121 | 2 | 2,3,14,15 | 2 | | | | |
| 122 | 2 | 8,9,20 | 2 | | | | |
| 123 | 2 | 8,9,20,21 | 2 | | | | |
| 124 | 3 | 0,1,12 | 2 | | | | |
| 125 | 3 | 0,1,12,13 | 2 | | | | |
| 126 | 3 | 6,7,18 | | | | | |

| 127 | 3 | 6,7,18,19 | 2 | | | | | |
| 128 | 3 | 2,3,14 | 2 | | | | | |

| 129 | 3 | 2,3,14,15 | 2 | | | | | |
| 130 | 3 | 8,9,20 | 2 | | | | | |
| 131 | 3 | 8,9,20,21 | 2 | | | | | |
| 132 | 3 | 4,5,16 | 2 | | | | | |
| 133 | 3 | 4,5,16,17 | 2 | | | | | |
| 134 | 3 | 10,11,22 | 2 | | | | | |
| 135 | 3 | 10,11,22,23 | 2 | | | | | |
| 136 | 2 | 0,2,3 | 1 | | | | | |
| 137-255 | Reserved | Reserved | Reserved | | | | | |

As an example, the operations based on Tables 20 to 27 described above may be based on Table 28 below.

[Table 28]

For DM-RS configuration enhanced type 1,
   - if a UE is scheduled with one codeword and assigned with the antenna port mapping with indices of {9, 10, 11 and 27 when applicable} in Table 7.3.1.2.2-7 and Table 7.3.1.2.2-7A of Clause 7.3.1.2 of [5, TS 38.212], or
   - if a UE is scheduled with one codeword and assigned with the antenna port mapping with indices of {9, 10, 11, 39, 40, 41, 42, 43, 44, 45 and 66 when applicable} in Table 7.3.1.2.2-8 and Table 7.3.1.2.2-8A of Clause 7.3.1.2 of [5, TS 38.212],
the UE may assume that all the remaining orthogonal antenna ports of the CDM groups, from which the antenna ports are indicated to the UE, are not associated with transmission of PDSCH to another UE, or
   - if a UE is scheduled with two codewords, the UE may assume that all the remaining orthogonal antenna ports are not associated with transmission of PDSCH to another UE.
For DM-RS configuration enhanced type 2,
   - if a UE is scheduled with one codeword and assigned with the antenna port mapping with indices of {9, 10, 20, 21, 22, 23 and 54 when applicable} in Table 7.3.1.2.2-9 and Table 7.3.1.2.2-9A of Clause 7.3.1.2 of [5, TS38.212], or
   - if a UE is scheduled with one codeword and assigned with the antenna port mapping with indices of {9, 10, 20, 21, 22, 23, 72, 73, 74, 75, 76, 77 and 136 when applicable} in Table 7.3.1.2.2-10 and in Table 7.3.1.2.2-10A of Clause 7.3.1.2 of [5, TS 38.212],
The UE may assume that all the remaining orthogonal antenna ports of CDM groups, from which the antenna ports are indicated to the UE, are not associated with transmission of PDSCH to another UE, or
-    if a UE is scheduled with two codewords, the UE may assume that all the remaining orthogonal antenna ports are not associated with transmission of PDSCH to another UE.

Table 29 below shows DMRS type 1 (ports 1000 to 1007)/enhanced DMRS type 1 (ports 1000 to 1015).

[Table 29]

**Table 7.4.1.1.2-1: Parameters for PDSCH DM-RS configuration type 1.**

| $p$ | CDM group $\lambda$ | $\Delta$ | $[w_f(0) \quad … \quad w_f(3)]$ | $[w_t(0) \quad w_t(1)]$ |
|---|---|---|---|---|
| 1000 | 0 | 0 | $[+1 \quad +1 \quad +1 \quad +1]$ | $[+1 \quad +1]$ |
| 1001 | 0 | 0 | $[+1 \quad -1 \quad +1 \quad -1]$ | $[+1 \quad +1]$ |
| 1002 | 1 | 1 | $[+1 \quad +1 \quad +1 \quad +1]$ | $[+1 \quad +1]$ |
| 1003 | 1 | 1 | $[+1 \quad -1 \quad +1 \quad -1]$ | $[+1 \quad +1]$ |
| 1004 | 0 | 0 | $[+1 \quad +1 \quad +1 \quad +1]$ | $[+1 \quad -1]$ |
| 1005 | 0 | 0 | $[+1 \quad -1 \quad +1 \quad -1]$ | $[+1 \quad -1]$ |
| 1006 | 1 | 1 | $[+1 \quad +1 \quad +1 \quad +1]$ | $[+1 \quad -1]$ |
| 1007 | 1 | 1 | $[+1 \quad -1 \quad +1 \quad -1]$ | $[+1 \quad -1]$ |
| 1008 | 0 | 0 | $[+1 \quad +1 \quad -1 \quad -1]$ | $[+1 \quad +1]$ |
| 1009 | 0 | 0 | $[+1 \quad -1 \quad -1 \quad +1]$ | $[+1 \quad +1]$ |
| 1010 | 1 | 1 | $[+1 \quad +1 \quad -1 \quad -1]$ | $[+1 \quad +1]$ |
| 1011 | 1 | 1 | $[+1 \quad -1 \quad -1 \quad +1]$ | $[+1 \quad +1]$ |
| 1012 | 0 | 0 | $[+1 \quad +1 \quad -1 \quad -1]$ | $[+1 \quad -1]$ |
| 1013 | 0 | 0 | $[+1 \quad -1 \quad -1 \quad +1]$ | $[+1 \quad -1]$ |
| 1014 | 1 | 1 | $[+1 \quad +1 \quad -1 \quad -1]$ | $[+1 \quad -1]$ |
| 1015 | 1 | 1 | $[+1 \quad -1 \quad -1 \quad +1]$ | $[+1 \quad -1]$ |

As an example, the number of DMRS CDM group(s) without data 1 or 2 determined/indicated based on the value of the antenna port field may correspond to CDM group {0} and CDM group {0, 1}, respectively.

Table 30 below shows DMRS type 2 (ports 1000 to 1011)/enhanced DMRS type 2 (ports 1000 to 1023).

[Table 30]

**Table 7.4.1.1.2-2: Parameters for PDSCH DM-RS configuration type 2.**

| $p$ | CDM group $\lambda$ | $\Delta$ | $[w_f(0) \quad … \quad w_f(3)]$ | $[w_t(0) \quad w_t(1)]$ |
|---|---|---|---|---|
| 0 | 0 | 0 | $[+1 \quad +1 \quad +1 \quad +1]$ | $[+1 \quad +1]$ |
| 1 | 0 | 0 | $[+1 \quad -1 \quad +1 \quad -1]$ | $[+1 \quad +1]$ |
| 2 | 1 | 2 | $[+1 \quad +1 \quad +1 \quad +1]$ | $[+1 \quad +1]$ |
| 3 | 1 | 2 | $[+1 \quad -1 \quad +1 \quad -1]$ | $[+1 \quad +1]$ |
| 4 | 2 | 4 | $[+1 \quad +1 \quad +1 \quad +1]$ | $[+1 \quad +1]$ |
| 5 | 2 | 4 | $[+1 \quad -1 \quad +1 \quad -1]$ | $[+1 \quad +1]$ |
| 6 | 0 | 0 | $[+1 \quad +1 \quad +1 \quad +1]$ | $[+1 \quad -1]$ |
| 7 | 0 | 0 | $[+1 \quad -1 \quad +1 \quad -1]$ | $[+1 \quad -1]$ |
| 8 | 1 | 2 | $[+1 \quad +1 \quad +1 \quad +1]$ | $[+1 \quad -1]$ |
| 9 | 1 | 2 | $[+1 \quad -1 \quad +1 \quad -1]$ | $[+1 \quad -1]$ |
| 10 | 2 | 4 | $[+1 \quad +1 \quad +1 \quad +1]$ | $[+1 \quad -1]$ |
| 11 | 2 | 4 | $[+1 \quad -1 \quad +1 \quad -1]$ | $[+1 \quad -1]$ |
| 12 | 0 | 0 | $[+1 \quad +1 \quad -1 \quad -1]$ | $[+1 \quad +1]$ |
| 13 | 0 | 0 | $[+1 \quad -1 \quad -1 \quad +1]$ | $[+1 \quad +1]$ |
| 14 | 1 | 2 | $[+1 \quad +1 \quad -1 \quad -1]$ | $[+1 \quad +1]$ |

| 15 | 1 | 2 | [+1 −1 −1 +1] | [+1 +1] |
|---|---|---|---|---|
| 16 | 2 | 4 | [+1 +1 −1 −1] | [+1 +1] |
| 17 | 2 | 4 | [+1 −1 −1 +1] | [+1 +1] |
| 18 | 0 | 0 | [+1 +1 −1 −1] | [+1 −1] |
| 19 | 0 | 0 | [+1 −1 −1 +1] | [+1 −1] |
| 20 | 1 | 2 | [+1 +1 −1 −1] | [+1 −1] |
| 21 | 1 | 2 | [+1 −1 −1 +1] | [+1 −1] |
| 22 | 2 | 4 | [+1 +1 −1 −1] | [+1 −1] |
| 23 | 2 | 4 | [+1 −1 −1 +1] | [+1 −1] |

As an example, the number of DMRS CDM group(s) without data 1, 2, or 3 determined/indicated based on the value of the antenna port field may correspond to CDM group {0}, CDM group {0, 1}, or CDM group {0, 1, 2}, respectively.

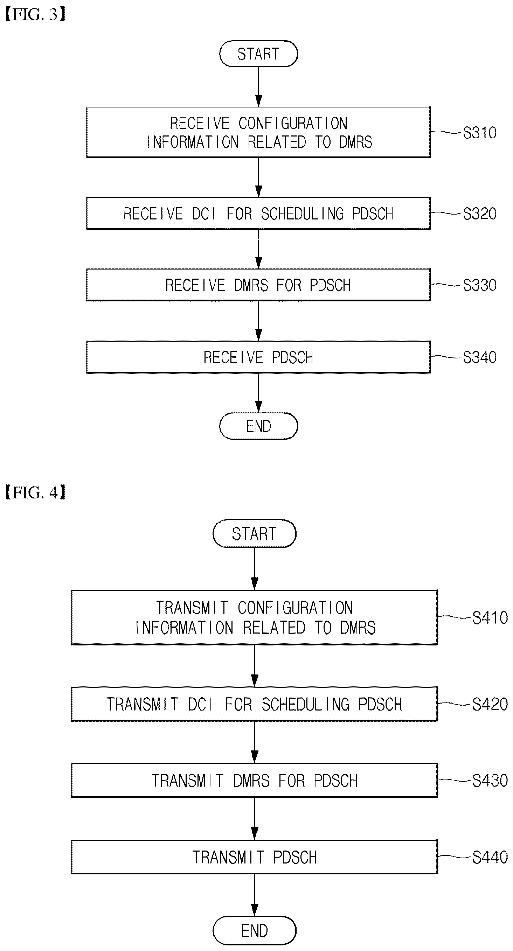

Hereinafter, the above-described embodiments will be described in detail with reference to FIGS. 3 and 4 in terms of the operations of the UE and the base station. Methods to be described below are just distinguished for convenience of description and it is needless to say that some components of any one method may be substituted with some components of another method or may be applied in combination with each other.

FIG. 3 is a flowchart for describing a method performed by a user equipment (UE) according to an embodiment of the present disclosure.

Referring to FIG. 3, the method performed by the UE according to an embodiment of the present disclosure includes a step S310 of receiving configuration information related to a DMRS, a step S320 of receiving DCI for scheduling of a PDSCH, a step S30 of receiving a DMRS for the PDSCH, and a step S340 of receiving the PDSCH.

As described above, when PDSCH scheduling for another UE is restricted in the following description, it is assumed that one codeword is scheduled for the UE.

In S310, the UE receives configuration information related to a demodulation reference signal (DMRS) from the base station. The configuration information related to the DMRS may be based on DMRS-DownlinkConfig in Table 1.

A DMRS configuration based on the configuration information may be based on a DMRS type or an enhanced DMRS type.

Specifically, the DMRS type may be DMRS Type 1 or DMRS Type 2. The enhanced DMRS type may be enhanced DMRS Type 1 or enhanced DRMS type 2.

For the DMRS Type 1, i) antenna ports 1000 to 1003 (e.g., single symbol DMRS) or ii) antenna ports 1000 to 1003 and 1008 to 1011 (e.g., double symbols DMRS) may be supported.

For the DMRS Type 2, i) antenna ports 1000 to 1005 (e.g., single symbol DMRS) or ii) antenna ports 1000 to 1011 (e.g., double symbols DMRS) may be supported.

For the enhanced DMRS Type 1, i) antenna ports 1000 to 1003 and 1008 to 1011 (e.g., single symbol DMRS) or ii) antenna ports 1000 to 1015 (e.g., double symbols DMRS) may be supported.

For the enhanced DMRS Type 2, i) antenna ports 1000 to 1005 and 1012 to 1017 (e.g., single symbol DMRS) or ii) antenna ports 1000 to 1023 (e.g., double symbols DMRS) may be supported.

That is, the number of antenna ports supported for enhanced DMRS type 1/2 may be twice the number (4, 6, 8, or 12) of antenna ports that are supported for DMRS type 1/2.

As an example, when the dmrs-Type (type2) is configured by the configuration information, the DMRS configuration may be based on DMRS type 2.

As an example, when the dmrs-Type (type2) is not configured by the configuration information, the DMRS configuration may be based on DMRS type 1.

As an example, when the dmrs-Type (type2) is configured by the configuration information, and dmrs-TypeEnh (enabled) is configured, the DMRS configuration may be based on enhanced DMRS type 2.

As an example, when the dmrs-Type (type2) is not configured by the configuration information, and the dmrs-TypeEnh (enabled) is configured, the DMRS configuration may be based on enhanced DMRS type 1.

In S320, the UE receives downlink control information (DCI) for scheduling a physical downlink shared channel (PDSCH) from the base station. The DCI may include an antenna port field.

The antenna port field may indicate one of values defined by a table. As an example, when the DMRS configuration is the DMRS type 1/2, the antenna port field may indicate a value defined in one of tables (e.g., Tables 1 to 4) based on one of Tables 5 to 12. As an example, when the DMRS configuration is the enhanced DMRS type 1/2, the antenna port field may indicate a value defined in one of tables (e.g., Tables 5 to 8 and Tables 20 to 27) defined based on at least one of Proposals 1 to 3.

Each of the values defined by the table may be related to a number of code division multiplexing (CDM) groups and at least one antenna port.

wherein 2 of the values defined in the table may be related to one CDM group and antenna ports 1000 and 1001. In this case, whether to apply the PDSCH scheduling restriction to another UE may vary based on whether the DMRS configuration is a DMRS type or an enhanced DMRS type. Hereinafter, this will be specifically described.

As an example, based on the DMRS configuration being based on the DMRS type, and the value indicated based on the antenna port field being 2: remaining orthogonal antenna ports may not be associated with PDSCH transmission to another UE.

As an example, based on the DMRS configuration being based on the enhanced DMRS type, and the value indicated based on the antenna port field being 2: remaining orthogonal antenna ports based on a same CDM group may be associated with PDSCH transmission to another UE in which the enhanced DMRS type is configured.

According to an embodiment, the table may be a table determined based on i) the DMRS configuration and ii) a maximum number of symbols related to the DMRS (e.g., a maximum number of OFDM symbols indicated by a max-length parameter of the configuration information) among a plurality of tables.

The plurality of tables may include i) a first table, a second table, a third table, and a fourth table which are related to the DMRS type and ii) a fifth table, a sixth table, a seventh table, and an eighth table which are related to the enhanced DMRS type.

The first table may be for the DMRS type 1 and max-length 1 (e.g., Table 5 or Table 6). The second table may be for the DMRS type 2 and max-length 2 (e.g., Table 7 or Table 8). The third table may be for the DMRS type 2 and max-length 1 (e.g., Table 9 or Table 10). The fourth table may be for the DMRS type 2 and max-length 2 (e.g., Table 11 or Table 12).

The fifth table may be for the enhanced DMRS type 1 and max-length 1 (e.g., Table 13, Table 20, or Table 21). The sixth table may be for the enhanced DMRS type 1 and max-length 2 (e.g., Table 22 or Table 23). The seventh table may be for the enhanced DMRS type 2 and max-length 2 (e.g., Table 24 or Table 25). The eighth table may be for the enhanced DMRS type 2 and max-length 2 (e.g., Table 26 or Table 27).

As an example, the table may be determined as the first table (e.g., Table 5) based on the DMRS configuration being DMRS type 1 and the maximum number being 1. The table may be determined as the fifth table (e.g., Table 13 or Table 20) based on the DMRS configuration being enhanced DMRS type 1 and the maximum number being 1.

The fifth table may include i) first values and ii) second values defined in the first table. Each of the first values (e.g., values 0 to 8 in Table 5) may be related to at least one of antenna ports 1000 to 1003. Each of the second values may be related to at least one of antenna ports 1008 to 1011 (e.g., values 12 to 20 in Table 13). That is, each second value may be related to an index(s) acquired by adding 8 to an antenna port index(s) indicated by each first value. When the first value is related to port index x, a second value corresponding to the first value may be related to port index x + 8.

A specific first value among the first values may be related to one CDM group and antenna ports 1000 and 1001. A specific second value among the second values may be related to one CDM group and antenna ports 1008 and 1009.

According to an embodiment, based on the DMRS configuration being based on the enhanced DMRS Type 1, and the value indicated based on the antenna port field being the specific second value:
remaining orthogonal antenna ports based on a same CDM group may be related to PDSCH transmission to another UE in which the enhanced DMRS Type 1 is configured. That is, based on Proposal 1 and Proposal 2, no MU scheduling restriction is applied to the first value (e.g., 2 of Cat 1). In this case, no MU scheduling may also similarly be applied to a second value (e.g., 14 in Cat. 2) corresponding to the first value.

According to an embodiment, the fifth table may further include third values related to three or more antenna ports among antenna ports 1000 to 1011. Based on the DMRS configuration being based on the enhanced DMRS type 1, and the value indicated based on the antenna port field being the specific third value:
remaining orthogonal antenna ports may not be associated with PDSCH transmission to another UE. The embodiment may be based on Proposal 3.

In S330, the UE receives the DMRS for the PDSCH from the base station.

In S340, the UE receives the PDSCH from the base station.

The operations based on S310 to S340 described above may be implemented by devices in FIG. 5. For example, a UE 200 may control one or more transceivers 230 and/or one or more memories 240 to perform the operations based on S310 to S340.

Some steps may be omitted or added in the method. As an example, in the method, the operation based on S340 may be omitted.

Hereinafter, the embodiments described above will be specifically described in terms of the operation of the base station.

S410 to S440 described below correspond to S310 to S340 described in FIG. 3. By considering the correspondence relationship, redundant descriptions are omitted. That is, a specific description of base station operations described below may be replaced with the description/embodiment of FIG. 3 corresponding to the corresponding operation. As an example, the description/embodiment of S310 to S340 in FIG. 3 may be additionally applied to the base station operations of S410 to S440 described below.

FIG. 4 is a flowchart for describing a method performed by a base station according to another embodiment of the present disclosure.

Referring to FIG. 4, the method performed by the base station according to another embodiment of the present disclosure includes a step S410 of transmitting configuration information related to a DMRS, a step S420 of transmitting DCI for scheduling of a PDSCH, a step S430 of transmitting a DMRS for the PDSCH, and a step S440 of transmitting the PDSCH.

In S410, the base station transmits configuration information related to a demodulation reference signal (DMRS) from the UE.

In S420, the base station transmits downlink control information (DCI) for scheduling a physical downlink shared channel (PDSCH) to the UE.

In S430, the base station transmits the DMRS for the PDSCH to the UE.

In S440, the base station transmits the PDSCH to the UE.

The operations based on S410 to S440 described above may be implemented by the devices in FIG. 5. For example, the base station 100 may control one or more transceivers 130 and/or one or more memories 140 to perform the operations based on S410 to S440.

Some steps may be omitted or added in the method. As an example, in the method, the operation based on S440 may be omitted.

A device to which an embodiment of the present disclosure is applicable (a device implementing the method/operation according to an embodiment of the present disclosure) is described below with reference to FIG. 5.

FIG. 5 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE) in a wireless communication system, the method comprising:

    receiving configuration information related to a demodulation reference signal (DMRS), wherein a DMRS configuration based on the configuration information is based on a DMRS type or an enhanced DMRS type;
    receiving downlink control information (DCI) for scheduling a physical downlink shared channel (PDSCH), wherein the DCI includes an antenna port field;
    receiving the DMRS for the PDSCH; and
    receiving the PDSCH,
    wherein the antenna port field indicates one of values defined by a table,
    wherein each of the values defined by the table is related to a number of code division multiplexing (CDM) groups and at least one antenna port,
    wherein 2 of the values defined in the table is related to one CDM group and antenna ports 1000 and 1001,
    wherein based on the DMRS configuration being based on the DMRS type, and the value indicated based on the antenna port field being 2:
    remaining orthogonal antenna ports are not associated with PDSCH transmission to another UE, and
    wherein based on the DMRS configuration being based on the enhanced DMRS type, and the value indicated based on the antenna port field being 2:
    remaining orthogonal antenna ports based on a same CDM group are related to PDSCH transmission to another UE in which the enhanced DMRS type is configured.

2.

3. The method of claim 2, wherein i) antenna ports 1000 to 1003 or ii) antenna ports 1000 to 1003 and 1008 to 1011 are supported for the DMRS Type 1.

4. The method of claim 2, wherein i) antenna ports 1000 to 1005 or ii) antenna ports 1000 to 1011 are supported for the DMRS Type 2.

5. The method of claim 2, wherein i) antenna ports 1000 to 1003 and 1008 to 1011 or ii) antenna ports 1000 to 1015 are supported for the enhanced DMRS Type 1.

6. The method of claim 2, wherein i) antenna ports 1000 to 1005 and 1012 to 1017 or ii) antenna ports 1000 to 1023 are supported for the enhanced DMRS Type 2.

7. The method of claim 1, wherein the table is a table determined based on i) the DMRS configuration and ii) a maximum number of symbols related to the DMRS among a plurality of tables.

8. The method of claim 7, wherein the plurality of tables include i) a first table, a second table, a third table, and a fourth table which are related to the DMRS type and ii) a fifth table, a sixth table, a seventh table, and an eighth table which are related to the enhanced DMRS type.

9. The method of claim 8, wherein the table is determined as the first table based on the DMRS configuration being DMRS type 1 and the maximum number being 1,

   wherein the table is determined as the fifth table based on the DMRS configuration being enhanced DMRS Type 1 and the maximum number being 1,
   wherein the fifth table includes i) first values and ii) second values defined in the first table,
   wherein each of the first values is related to at least one of antenna ports 1000 to 1003, and
   wherein each of the second values is related to at least one of antenna ports 1008 to 1011.

10. The method of claim 9, wherein a specific first value among the first values is related to one CDM group and antenna ports 1000 and 1001, and
    wherein a specific second value among the second values is related to one CDM group and antenna ports 1008 and 1009.

11. The method of claim 10, wherein based on the DMRS configuration being based on the enhanced DMRS Type 1, and the value indicted based on the antenna port field being the specific second value:
    remaining orthogonal antenna ports based on a same CDM group are related to PDSCH transmission to another UE in which the enhanced DMRS Type 1 is configured.

12. The method of claim 9, wherein the fifth table further includes third values related to three or more antenna ports among antenna ports 1000 to 1011, and
    wherein a specific third value among the third values is related to one CDM group and antenna ports 1000, 1001, 1008, and 1009.

13. The method of claim 12, wherein based on the DMRS configuration being based on the enhanced DMRS type 1, and the value indicted based on the antenna port field being the specific third value:
    remaining orthogonal antenna ports are not associated with PDSCH transmission to another UE.

14. A user equipment operating in a wireless communication system, the user equipment comprising:

    one or more transceivers;
    one or more processors; and
    one or more memories connected to the one or more processors and storing instructions,
    wherein the instructions configure the one or more processors to perform all steps of a method according to any one of claims 1 to 13 based on being executed by the one or more processors.

15. A device comprising:

    one or more memories; and
    one or more processors operably connected to the one or more memories,
    wherein the one or more memories store instructions that configure the one or more processors to perform all steps of a method according to any one of claims 1 to 13 based on being executed by the one or more processors.

16. One or more non-transitory computer readable mediums storing instructions,
    wherein the instructions executable by one or more processors configure the one or more processors to perform all steps of a method according to any one of claims 1 to 13.

17. A method performed by a base station in a wireless communication system, the method comprising:

    transmitting configuration information related to a demodulation reference signal (DMRS), wherein a DMRS configuration based on the configuration information is based on a DMRS type or an enhanced DMRS type;
    transmitting downlink control information (DCI) for scheduling a physical downlink shared channel (PDSCH), wherein the DCI includes an antenna port field;
    transmitting the DMRS for the PDSCH; and

transmitting the PDSCH,

wherein the antenna port field indicates one of values defined by a table,

wherein each of the values defined by the table is related to a number of code division multiplexing (CDM) groups and at least one antenna port,

wherein 2 of the values defined in the table is related to one CDM group and antenna ports 1000 and 1001,

wherein based on the DMRS configuration being based on the DMRS type, and the value indicated based on the antenna port field being 2:

remaining orthogonal antenna ports are not associated with PDSCH transmission to another UE, and

wherein based on the DMRS configuration being based on the enhanced DMRS type, and the value indicated based on the antenna port field being 2:

remaining orthogonal antenna ports based on a same CDM group are related to PDSCH transmission to another UE in which the enhanced DMRS type is configured.

18. A base station operating in a wireless communication system, the base station comprising:

one or more transceivers;

one or more processors; and

one or more memories connected to the one or more processors and storing instructions,

wherein the instructions configure the one or more processors to perform all steps of a method according to claim 17 based on being executed by the one or more processors.

【FIG. 1】

【FIG. 2】

【FIG. 3】

```
              ( START )
                  │
                  ▼
  ┌─────────────────────────────────┐
  │      RECEIVE CONFIGURATION       │────S310
  │  INFORMATION RELATED TO DMRS     │
  └─────────────────────────────────┘
                  │
                  ▼
  ┌─────────────────────────────────┐
  │  RECEIVE DCI FOR SCHEDULING PDSCH │────S320
  └─────────────────────────────────┘
                  │
                  ▼
  ┌─────────────────────────────────┐
  │      RECEIVE DMRS FOR PDSCH       │────S330
  └─────────────────────────────────┘
                  │
                  ▼
  ┌─────────────────────────────────┐
  │          RECEIVE PDSCH           │────S340
  └─────────────────────────────────┘
                  │
                  ▼
              ( END )
```

【FIG. 4】

```
              ( START )
                  │
                  ▼
  ┌─────────────────────────────────┐
  │      TRANSMIT CONFIGURATION      │────S410
  │  INFORMATION RELATED TO DMRS     │
  └─────────────────────────────────┘
                  │
                  ▼
  ┌─────────────────────────────────┐
  │  TRANSMIT DCI FOR SCHEDULING PDSCH │────S420
  └─────────────────────────────────┘
                  │
                  ▼
  ┌─────────────────────────────────┐
  │      TRANSMIT DMRS FOR PDSCH      │────S430
  └─────────────────────────────────┘
                  │
                  ▼
  ┌─────────────────────────────────┐
  │          TRANSMIT PDSCH          │────S440
  └─────────────────────────────────┘
                  │
                  ▼
              ( END )
```

【FIG. 5】

# EP 4 664 812 A1

## INTERNATIONAL SEARCH REPORT

International application No.

**PCT/KR2024/001897**

| A. | CLASSIFICATION OF SUBJECT MATTER |
|---|---|

**H04L 5/00**(2006.01)i; **H04B 7/0452**(2017.01)i

According to International Patent Classification (IPC) or to both national classification and IPC

| B. | FIELDS SEARCHED |
|---|---|

Minimum documentation searched (classification system followed by classification symbols)

H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복조 참조 신호(demodulation reference signal), 설정(configuration), 타입 (type), 향상된 DMRS 타입(enhanced DMRS type), 코드 분할 다중화 그룹(code division multiplexing group), 안테나 포트 (antenna port)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022-031544 A1 (INTEL CORPORATION) 10 February 2022 (2022-02-10)<br>See paragraphs [0104] and [0117]; claim 1; and table 12. | 1-18 |
| Y | NTT DOCOMO, INC. Discussion on DMRS enhancements. R1-2211972, 3GPP TSG RAN WG1 #111. Toulouse, France. 07 November 2022.<br>See sections 2.3, 2.6 and 3.1; and figures 2.1-2.5 and 2.7. | 1-18 |
| A | ZTE. DMRS enhancement for UL/DL MU-MIMO and 8 Tx UL SU-MIMO. R1-2210938, 3GPP TSG RAN WG1 #111. Toulouse, France. 07 November 2022.<br>See sections 2.1-2.5. | 1-18 |
| A | SAMSUNG. Views on DMRS enhancements. R1-2212031, 3GPP TSG RAN WG1 #111. Toulouse, France. 07 November 2022.<br>See sections 2.1-2.3. | 1-18 |
| A | WO 2021-245632 A1 (LENOVO (SINGAPORE) PTE. LTD.) 09 December 2021 (2021-12-09)<br>See paragraphs [0086]-[0127]; and figures 3-4B. | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 May 2024** | **27 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/001897**

| Patent document cited in search report | | | Publication date (day/month/year) | Patent family member(s) | | | Publication date (day/month/year) |
|---|---|---|---|---|---|---|---|
| WO | 2022-031544 | A1 | 10 February 2022 | None | | | |
| WO | 2021-245632 | A1 | 09 December 2021 | CN | 115715460 | A | 24 February 2023 |
| | | | | EP | 4162638 | A1 | 12 April 2023 |
| | | | | US | 2023-0231683 | A1 | 20 July 2023 |

Form PCT/ISA/210 (patent family annex) (July 2022)